# EUROPEAN PATENT APPLICATION

(11) **EP 4 187 736 A1**
(43) Date of publication of application: **31.05.2023**
(21) Application number: 21857617.1
(22) Date of filing: 16.08.2021
(51) Int. Cl.: H02J 1/10, H02M 3/158

(54) **POWER SUPPLY SYSTEM AND METHOD**

(30) Priority: 19.08.2020 CN 202010839416
(71) Applicant: Huawei Digital Power Technologies Co., Ltd., Shenzhen, Guangdong 518043 (CN)
(72) Inventor: CHEN, Dong, Shenzhen, Guangdong 518129 (CN); CAO, Zhen, Shenzhen, Guangdong 518129 (CN); LIU, Yongquan, Shenzhen, Guangdong 518129 (CN); YAO, Xiaofeng, Shenzhen, Guangdong 518129 (CN)
(74) Representative: Pfenning, Meinig & Partner mbB
(86) International application number: PCT/CN2021/112746
(87) International publication number: WO 2022/037522

(57) **Abstract**

This application provides a power supply system and method. The power supply system includes: a first branch on which a first string is located, a second branch on which a second string is located, a transfer switch unit, a first voltage compensation unit, and a controller. The transfer switch unit is configured to connect the first voltage compensation unit to the first branch based on a voltage compensation enabling signal received from the controller, where the voltage compensation enabling signal is generated by the controller based on an operating state parameter of the first string and an operating state parameter of the second string. The first voltage compensation unit is configured to compensate for an output voltage of the first branch. Based on this application, a voltage compensation unit is connected only to a branch on which a string requiring voltage compensation is located, instead of a branch on which a string requiring no voltage compensation is located, thereby preventing the voltage compensation unit from causing an unnecessary system loss in the branch requiring no voltage compensation, and reducing system costs.

## Description

This application claims priority to Chinese Patent Application No. 202010839416.8, filed with the China National Intellectual Property Administration on August 19, 2020 and entitled "POWER SUPPLY SYSTEM AND METHOD", which is incorporated herein by reference in its entirety.

### TECHNICAL FIELD

This application relates to the field of power supply technologies, and in particular, to a power supply system and method.

### BACKGROUND

A string includes a plurality of photovoltaic modules or a plurality of batteries connected in series. A plurality of strings may be connected in parallel to form a power supply system. The power supply system may be widely applied to scenarios such as solar power generation and an uninterruptible power supply. The strings vary with each other. For example, in photovoltaic application, shading statuses of the strings are different, resulting in different output voltages at maximum power points of the strings. Therefore, an output power of the power supply system has a loss. For another example, in discharge application of a battery, quantities of batteries included in the strings and/or depreciation degrees of the batteries are different, and discharge termination voltages of the strings are different. Consequently, batteries in some of the strings have been fully discharged, but batteries in some of the strings have not, and the like.

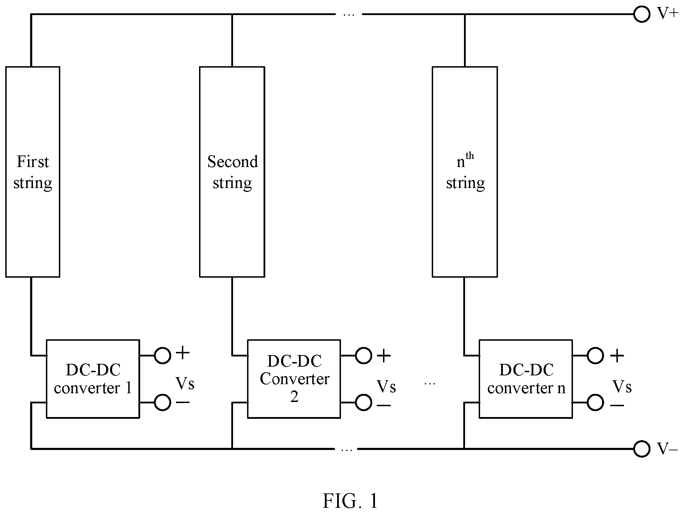

To ensure the output power of the power supply system, or to make the discharge termination voltages of the strings consistent, a power supply system shown in FIG. 1 is used in a conventional technology, a DC-DC converter (Direct-Current-Direct-Current converter, a voltage converter that converts an input direct current voltage to a specified direct current voltage and outputs the specified direct current voltage) is connected to a branch on which each string is located, and each DC-DC converter compensates for an output voltage of the branch connected to the DC-DC converter. Each string in the conventional technology is connected to the DC-DC converter in series, and an output current of the string flows through the DC-DC converter, causing a high system loss.

### SUMMARY

Based on the foregoing problem, this application provides a power supply system and method, to reduce a system loss and system costs.

A first aspect of embodiments of this application provides a power supply system, including: a first branch on which a first string is located, a second branch on which a second string is located, a transfer switch unit, a first voltage compensation unit, and a controller.

The transfer switch unit chooses, based on a voltage compensation enabling signal sent by the controller, to connect the first voltage compensation unit to the first branch, so that the first voltage compensation unit compensates for an output voltage of the first branch. The voltage compensation enabling signal is generated by the controller based on an operating state parameter of the first string and an operating state parameter of the second string. That is, based on operating state parameters of different strings, a voltage compensation unit is connected only to a branch on which a string requiring voltage compensation is located, instead of a branch on which a string requiring no voltage compensation is located, thereby preventing the voltage compensation unit from causing an unnecessary system loss in the branch requiring no voltage compensation, and reducing system costs.

With reference to the first aspect, in a first possible implementation, the power supply system further includes a first direct current bus and a second direct current bus. The first voltage compensation unit includes a first output terminal and a second output terminal, and the first output terminal of the first voltage compensation unit is connected to the first direct current bus. The transfer switch unit connects the second output terminal of the first voltage compensation unit to one terminal of the first string based on the voltage compensation enabling signal; and connects the other terminal of the first string to the second direct current bus. In the possible implementation, the first direct current bus may be a positive direct current bus or a negative direct current bus. The transfer switch unit and the first voltage compensation unit may be disposed on both a positive direct current bus side and a negative direct current bus side, so that applicability of the power supply system can be improved.

With reference to the first possible implementation of the first aspect, in a second possible implementation, the transfer switch unit connects one terminal of the second string to the first direct current bus based on the voltage compensation enabling signal; and the other terminal of the second string is connected to the second direct current bus. In the possible implementation, the second string is directly connected to the direct current buses without going through the first voltage compensation unit, thereby preventing the voltage compensation unit from generating an unnecessary loss on the second branch.

With reference to the first possible implementation of the first aspect or the second possible implementation of the first aspect, in a third possible implementation, the first voltage compensation unit further includes a first input terminal and a second input terminal.

The first input terminal of the first voltage compensation unit is connected to the first direct current bus, and the second input terminal of the first voltage compensation unit is connected to the second direct current bus. In the possible implementation, connecting the direct current bus to the input of the first voltage compensation unit is actually using output of the second string as a power supply of the first voltage compensation unit, thereby avoiding an external connection to another power supply. In this way, a quantity of power supplies of the system can be reduced, and system simplicity can be improved.

With reference to any one of the first aspect or the possible implementations of the first aspect, in a fourth possible implementation, the first string includes at least two substrings. In the possible implementation, the at least two substrings are connected in parallel, and share one transfer switch unit and one voltage compensation unit, so that system costs can be further reduced.

With reference to the fourth possible implementation of the first aspect, in a fifth possible implementation, output voltage ranges corresponding to respective maximum power points of the at least two substrings included in the first string at least partially overlap.

With reference to any one of the first aspect or the possible implementations of the first aspect, in a sixth possible implementation, the transfer switch unit includes a first transfer subswitch between the first voltage compensation unit and the first string, and the first transfer subswitch is a contact switch or a semiconductor switch.

The transfer switch unit controls, based on the voltage compensation enabling signal, the first transfer subswitch to connect the first voltage compensation unit and the first string.

With reference to the sixth possible implementation of the first aspect, in a seventh possible implementation, the transfer switch unit further includes a second transfer subswitch.

The transfer switch unit controls, based on the voltage compensation enabling signal, the second transfer subswitch to connect the first direct current bus in the power supply system and the second string.

With reference to the sixth possible implementation of the first aspect, in an eighth possible implementation, the first transfer subswitch includes a first semiconductor switch and a second semiconductor switch, the first semiconductor switch is configured to connect the first voltage compensation unit and the first string, and the second semiconductor switch is configured to disconnect the first string from the first direct current bus in the power supply system.

The transfer switch unit controls, based on the voltage compensation enabling signal, the first semiconductor switch to connect the first voltage compensation unit and the first string, and controls the second semiconductor switch to disconnect the first string from the first direct current bus. In the possible implementation, the semiconductor switches are used as the transfer switch unit. Compared with a contact switch, the semiconductor switches can reduce a volume of the power supply system, and perform switch-on and switch-off operations at a high voltage and a high current, thereby improving system security.

With reference to the sixth possible implementation of the first aspect, in a ninth possible implementation, the first transfer subswitch includes a third semiconductor switch and a diode, the third semiconductor switch is configured to connect the first voltage compensation unit and the first string, and the diode is in a reverse cut-off state when the third semiconductor switch connects the first voltage compensation unit and the first string, so that the diode is configured to disconnect the first string from the first direct current bus in the power supply system.

The transfer switch unit controls, based on the voltage compensation enabling signal, the third semiconductor switch to connect the first voltage compensation unit and the first string, and disconnects the first string from the first direct current bus. In the possible implementation, a combination of the semiconductor switch and the diode is used as the transfer switch unit. Compared with use of two semiconductor switches, system costs are further reduced.

With reference to any one of the first aspect or the possible implementations of the first aspect, in a tenth possible implementation, the controller further determines a voltage compensation reference value based on the operating state parameter of the first string and the operating state parameter of the second string, and sends the voltage compensation reference value to the first voltage compensation unit, and the first voltage compensation unit compensates for the output voltage of the first branch based on the voltage compensation reference value.

With reference to any one of the first aspect or the possible implementations of the first aspect, in an eleventh possible implementation, the first voltage compensation unit includes a non-isolated buck conversion circuit. In the possible implementation, the non-isolated buck conversion circuit with a small volume and high efficiency is used as the voltage compensation unit, so that a volume of the system can be reduced and efficiency of the system can be improved.

With reference to any one of the first aspect or the possible implementations of the first aspect, in a twelfth possible implementation, the power supply system includes N branches on which N strings are located and M voltage compensation units, both N and M are positive integers, and M is less than N; the N branches include the first branch and the second branch, and the M voltage compensation units include the first voltage compensation unit; and the transfer switch unit is configured to respectively connect all or some of the voltage compensation units to some branches based on the voltage compensation enabling signal. In the possible implementation, a voltage compensation unit is connected to a branch requiring voltage compensation, instead of a branch requiring no voltage compensation, thereby preventing the voltage compensation unit from causing an unnecessary system loss in the branch requiring no voltage compensation. In addition, a quantity of voltage compensation units is less than a quantity of strings. Compared with a conventional technology in which a quantity of voltage compensation units is equal to a quantity of strings, the quantity of voltage compensation units can be reduced, and system costs can be reduced.

With reference to any one of the first aspect or the possible implementations of the first aspect, in a thirteenth possible implementation, each string includes at least one direct current component and a converter corresponding to the direct current component, and the converter is configured to adjust an operating state of the corresponding direct current component. In the possible implementation, the converter converts an input voltage into a constant voltage through boosting or bucking. That is, voltage adjustment is performed on the direct current component in the string by using the converter, to optimize the operating state of the direct current component.

With reference to any one of the first aspect or the possible implementations of the first aspect, in a fourteenth possible implementation, the first string and the second string are photovoltaic strings.

With reference to any one of the first aspect or the first to the thirteenth possible implementations of the first aspect, in a fifteenth possible implementation, the first string and the second string are energy storage battery strings.

A second aspect of embodiments of this application provides a string compensation method, applied to a power supply system, where the power supply system includes a first branch on which a first string is located, a second branch on which a second string is located, a first voltage compensation unit, and a controller; and the method includes:
receiving a voltage compensation enabling signal from the controller, and connecting the first voltage compensation unit to the first branch based on the voltage compensation enabling signal, where the voltage compensation enabling signal is generated by the controller based on an operating state parameter of the first string and an operating state parameter of the second string; and the first voltage compensation unit is configured to compensate for an output voltage of the first branch. That is, based on operating state parameters of different strings, a voltage compensation unit is connected only to a branch on which a string requiring voltage compensation is located, instead of a branch on which a string requiring no voltage compensation is located, thereby preventing the voltage compensation unit from causing an unnecessary system loss in the branch requiring no voltage compensation, and reducing system costs.

With reference to the second aspect, in a first possible implementation, the power supply system further includes a first direct current bus and a second direct current bus; and the first voltage compensation unit includes a first output terminal and a second output terminal, and the first output terminal of the first voltage compensation unit is connected to the first direct current bus; and
the connecting the first voltage compensation unit to the first branch based on the voltage compensation enabling signal is specifically implemented as:
connecting the second output terminal of the first voltage compensation unit to one terminal of the first string based on the voltage compensation enabling signal, where the other terminal of the first string is connected to the second direct current bus.

With reference to the first possible implementation of the second aspect, in a second possible implementation, the method further includes:
connecting one terminal of the second string to the first direct current bus based on the voltage compensation enabling signal, where the other terminal of the second string is connected to the second direct current bus.

With reference to any one of the possible implementations of the second aspect, in a third possible implementation, the transfer switch unit includes a first transfer subswitch between the first voltage compensation unit and the first string, and the first transfer subswitch is a contact switch or a semiconductor switch; and

the connecting the first voltage compensation unit to the first branch based on the voltage compensation enabling signal is specifically implemented as:
controlling, based on the voltage compensation enabling signal, the first transfer subswitch to connect the first voltage compensation unit and the first string.

With reference to the third possible implementation of the second aspect, in a fourth possible implementation, the transfer switch unit further includes a second transfer subswitch; and the method further includes:
controlling, based on the voltage compensation enabling signal, the second transfer subswitch to connect the first direct current bus in the power supply system and the second string.

With reference to the third possible implementation of the second aspect, in a fifth possible implementation, the first transfer subswitch includes a first semiconductor switch and a second semiconductor switch; and
the connecting the second output terminal of the first voltage compensation unit to one terminal of the first string based on the voltage compensation enabling signal is specifically implemented as:
controlling, based on the voltage compensation enabling signal, the first semiconductor switch to connect the first voltage compensation unit and the first string, and controlling the second semiconductor switch to disconnect the first string from the first direct current bus.

With reference to the third possible implementation of the second aspect, in a sixth possible implementation, the first transfer subswitch includes a third semiconductor switch and a diode; and
the connecting the second output terminal of the first voltage compensation unit to one terminal of the first string based on the voltage compensation enabling signal is specifically implemented as:
controlling, based on the voltage compensation enabling signal, the third semiconductor switch to connect the first voltage compensation unit and the first string, and enabling the diode to be in a reverse cut-off state, to disconnect the first string from the first direct current bus.

With reference to any one of the second aspect or the possible implementations of the second aspect, in a seventh possible implementation, the controller is further configured to determine a voltage compensation reference value based on the operating state parameter of the first string and the operating state parameter of the second string, and send the voltage compensation reference value to the first voltage compensation unit; and the first voltage compensation unit is configured to compensate for the output voltage of the first branch based on the voltage compensation reference value.

With reference to any one of the second aspect or the possible implementations of the second aspect, in an eighth possible implementation, the power supply system includes N branches on which N strings are located and M voltage compensation units, both N and M are positive integers, and M is less than N; and the N branches include the first branch and the second branch, and the M voltage compensation units include the first voltage compensation unit; and
the foregoing method further includes:
respectively connecting all or some of the voltage compensation units to some branches based on the voltage compensation enabling signal.

With reference to any one of the second aspect or the possible implementations of the second aspect, in a ninth possible implementation, each string includes at least one direct current component and a converter corresponding to the direct current component; and
the controller is further configured to control the converter to adjust an operating state of the corresponding direct current component.

### BRIEF DESCRIPTION OF DRAWINGS

FIG. 1 shows a power supply system according to a conventional technology;
FIG. 2 is a schematic diagram of a structure of a power supply system according to an embodiment of this application;
FIG. 3 is a diagram of a circuit principle of a voltage compensation unit according to an embodiment of this application;
FIG. 4 is a schematic diagram of a system architecture of a power supply system according to an embodiment of this application;
FIG. 5A to FIG. 5C are respectively schematic diagrams of a transfer switch according to an embodiment of this application;
FIG. 6 is a schematic diagram of a system architecture of another power supply system according to an embodiment of this application;
FIG. 7 is a schematic diagram of another transfer switch according to an embodiment of this application;
FIG. 8 is a schematic diagram of a system architecture of a power supply system according to an embodiment of this application;
FIG. 9 is a schematic diagram of still another transfer switch according to an embodiment of this application;
FIG. 10 is a schematic diagram of a system architecture of still another power supply system according to an embodiment of this application;
FIG. 11 is a schematic diagram of a system architecture of yet another power supply system according to an embodiment of this application;
FIG. 12 shows voltage-power curves of substrings according to an embodiment of this application;
FIG. 13 is a schematic diagram of a system architecture of still yet another power supply system according to an embodiment of this application;
FIG. 14A and FIG. 14B are respectively schematic diagrams of yet another transfer switch according to an embodiment of this application; and
FIG. 15A to FIG. 15D are respectively schematic diagrams of still yet another transfer switch according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

Due to a difference between strings in a power supply system, voltages at two terminals of each string may be different. However, the strings are connected in parallel, and regardless of the voltages at the two terminals after the strings are connected in parallel, it is impossible to enable the strings to operate in their respective optimal states. Therefore, based on a method shown in FIG. 1, a DC-DC converter is connected to a branch on which each string is located, and an output current of each string needs to flow through the DC-DC converter, causing a high system loss.

In this application, different operating state parameters of the strings are compared, to choose to connect a voltage compensation unit to a branch on which a string requiring voltage compensation is located, instead of a branch on which a string requiring no voltage compensation is located, thereby reducing a system loss and system costs.

In an optional embodiment, the technical solutions of this application may be applied to a photovoltaic scenario. In this case, each of the strings included in the power supply system provided in this application is a photovoltaic string, and each photovoltaic string may include a plurality of photovoltaic modules connected in series and/or in parallel. The power supply system may further include a photovoltaic inverter control module, and the photovoltaic inverter control module inverts an output voltage of each photovoltaic string for output. The power supply system may transmit an inverted voltage to a power grid. In an optional implementation scenario, the power supply system may further be applied to an uninterruptible power supply scenario. That is, an energy storage battery such as a nickel-cadmium battery, a nickel-metal hydride battery, a lithium ion battery, or a lithium polymer battery may be disposed between the photovoltaic inverter control module and the power grid.

A controller obtains operating state parameters of photovoltaic strings, for example, output voltages; when the operating state parameters of the photovoltaic strings are different, generates a voltage compensation enabling signal, and sends the voltage compensation enabling signal to a transfer switch unit in the power supply system, so that the transfer switch unit chooses, based on the voltage compensation enabling signal, to connect the voltage compensation unit in the power supply system to a branch requiring voltage compensation, instead of a branch requiring no voltage compensation, thereby preventing the voltage compensation unit from causing an unnecessary system loss in the branch requiring no voltage compensation. In addition, a quantity of voltage compensation units is less than a quantity of strings. Compared with a conventional technology in which a quantity of voltage compensation units is equal to a quantity of strings, the quantity of voltage compensation units can be reduced, and system costs can be reduced.

Optionally, the controller may be disposed in the photovoltaic inverter control module or each string.

In another optional embodiment, the technical solutions of this application may also be applied to a battery charge/discharge scenario. In this case, each of the strings included in the power supply system provided in this application is an energy storage battery string, and each energy storage battery string may include a plurality of energy storage batteries connected in series and/or in parallel. An input terminal of the power supply system is connected to a charging device, and an output terminal is connected to an electrical device. The charging device may be, for example, a charging pile or a power grid, and the electrical device may be, for example, a vehicle-mounted system. For example, the power supply system may be connected to the electrical device by using the DC-DC converter, and the DC-DC converter may convert an output voltage of the power supply system into a preset fixed voltage value and output the preset fixed voltage value to the electrical device.

A controller obtains operating state parameters of energy storage battery strings, for example, battery voltages and charging currents; when the operating state parameters of the energy storage battery strings are different, generates a voltage compensation enabling signal, and sends the voltage compensation enabling signal to a transfer switch unit in the power supply system, so that the transfer switch unit chooses, based on the voltage compensation enabling signal, to connect a voltage compensation unit in the power supply system to a branch requiring voltage compensation, instead of a branch requiring no voltage compensation, thereby preventing the voltage compensation unit from causing an unnecessary system loss in the branch requiring no voltage compensation. In addition, a quantity of voltage compensation units is less than a quantity of strings. Compared with a conventional technology in which a quantity of voltage compensation units is equal to a quantity of strings, the quantity of voltage compensation units can be reduced, and system costs can be reduced. For example, the operating state parameter of the energy storage battery string is the battery voltage. The controller obtains a 6 V battery voltage of a first energy storage battery string and an 8 V battery voltage of a second energy storage battery string, generates a voltage compensation enabling signal, and sends the voltage compensation enabling signal to the transfer switch unit in the power supply system, so that the transfer switch unit connects, based on the voltage compensation enabling signal, the voltage compensation unit to a branch on which the first energy storage battery string is located. A voltage that is output by the voltage compensation unit is 2 V, so that the first energy storage battery string is not overcharged or over-discharged, and the second energy storage battery string can be fully charged or fully discharged. That is, it can be understood that the battery voltages of the energy storage battery strings reach a balanced state.

Optionally, the controller may be disposed in the power supply system, the charging device, or the electrical device.

The application scenarios of the power supply system provided in this application are described above as examples, rather than being exhausted, and the application scenarios are not limited in this application.

With reference to the accompanying drawing, a structure of the power supply system provided in this application is described below in detail.

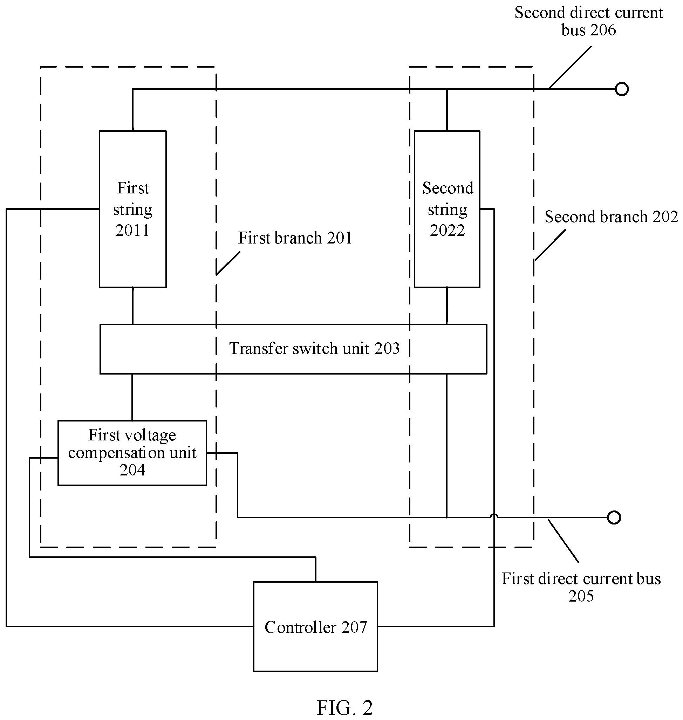

FIG. 2 is a block diagram of a structure of a power supply system according to an embodiment of this application. As shown in FIG. 2, the power supply system may include: a first branch 201 on which a first string 2011 is located, a second branch 202 on which a second string 2022 is located, a transfer switch unit 203, and a first voltage compensation unit 204. The first branch 201 is connected to the second branch 202 in parallel, and the transfer switch unit 203 is separately connected to the first branch 201, the second branch 202, and the first voltage compensation unit 204.

In this embodiment of this application, the transfer switch unit 203 connects the first voltage compensation unit 204 to the first branch 201 based on a voltage compensation enabling signal received from a controller 207. An input terminal of the controller 207 is connected to the first string 2011 and the second string 2022. The input terminal connected to the first string 2011 and the second string 2022 may be a same port or different ports. This is not limited herein. An output terminal of the controller 207 is connected to the first voltage compensation unit 204. The controller 207 may obtain an operating state parameter of the first string 2011 and an operating state parameter of the second string 2022 in real time, and generate the voltage compensation enabling signal based on the operating state parameter of the first string 2011 and the operating state parameter of the second string 2022. The first voltage compensation unit 204 compensates for an output voltage of the first branch 201.

An operating state parameter of a string may be an output voltage, an output current, an output power, and/or the like of the string. In this application, the output voltage is used as an example for description.

The controller 207 obtains the operating state parameter of the first string 2011 and the operating state parameter of the second string 2022, and generates the voltage compensation enabling signal based on the operating state parameter of the first string 2011 and the operating state parameter of the second string 2022. During specific implementation, when an output voltage of the first string 2011 is different from an output voltage of the second string 2022, for example, the output voltage of the first string 2011 is relatively small, the controller 207 may generate a voltage compensation enabling signal, and send the voltage compensation enabling signal to the transfer switch unit 203. When receiving the voltage compensation enabling signal, the transfer switch unit 203 controls the first voltage compensation unit 204 to connect to the first branch 201. That is, the first voltage compensation unit 204 is connected only to the first branch 201 requiring voltage compensation, instead of the second branch 202 requiring no voltage compensation, thereby preventing the voltage compensation unit from causing an unnecessary system loss in the second branch 202, and reducing a quantity of voltage compensation units in the power supply system and system costs.

In a feasible implementation, the power supply system further includes a first direct current bus 205 and a second direct current bus 206, the first voltage compensation unit 204 includes a first output terminal and a second output terminal, and the first output terminal is connected to the first direct current bus 205. When receiving the voltage compensation enabling signal, the transfer switch unit 203 controls the first voltage compensation unit 204 to connect to the first branch 201, and specific implementation may be: connecting the second output terminal of the first voltage compensation unit 204 to one terminal of the first string 2011. The other terminal of the first string 2011 is connected to the second direct current bus 206.

Further, in an optional implementation, when receiving the voltage compensation enabling signal, the transfer switch unit 203 connects one terminal of the second string 2022 to the first direct current bus 205. The other terminal of the second string 2022 is connected to the second direct current bus 206.

It should be noted that, in a default state, the first voltage compensation unit 204 is connected to neither the first branch 201 nor the second branch 202.

In addition, when the output voltage of the first string 2011 is the same as the output voltage of the second string 2022, based on the operating state parameter of the first string 2011 and the operating state parameter of the second string 2022, the controller 207 may not generate the voltage compensation enabling signal or may generate a default voltage compensation signal. When receiving no voltage compensation enabling signal or the default voltage compensation signal, the transfer switch unit 203 controls the first voltage compensation unit 204 to connect to neither the first branch 201 nor the second branch 202.

In a feasible implementation, the power supply system is applied to the photovoltaic field, the first string 2011 and the second string 2022 are photovoltaic strings, and the controller 207 may be disposed in a photovoltaic inverter control module in the power supply system.

In another feasible implementation, a processor is disposed in each of the first string 2011 and the second string 2022. Each processor may collect an operating state parameter of a corresponding string, and summarize the collected operating state parameter into any processor. A processor that obtains operating state parameters of all strings is the controller 207.

Further, the controller 207 may further determine a voltage compensation reference value based on the operating state parameter of the first string 2011 and the operating state parameter of the second string 2022, and send the voltage compensation reference value to the first voltage compensation unit 204, so that the first voltage compensation unit 204 compensates for the output voltage of the first branch 201 based on the voltage compensation reference value. That is, an output voltage of the first voltage compensation unit 204 is equal to the voltage compensation reference value. For example, the output voltage of the first string 2011 is 200 V, and the output voltage of the second string 2022 is 300 V In this case, the voltage compensation reference value is 100 V In other words, the output voltage of the first voltage compensation unit 204 is 100 V

In an optional implementation, input of the first voltage compensation unit 204 may be from a direct current power supply independent of the power supply system. In another optional implementation, input of the first voltage compensation unit 204 may be the second string 2022. During specific implementation, the first voltage compensation unit 204 further includes a first input terminal and a second input terminal, the first input terminal of the first voltage compensation unit 204 is connected to the first direct current bus 205, and the second input terminal of the first voltage compensation unit 204 is connected to the second direct current bus 206. When the first direct current bus 205 is a negative direct current bus, the first input terminal of the first voltage compensation unit 204 is a negative input terminal. When the first direct current bus 205 is a positive direct current bus, the first input terminal of the first voltage compensation unit 204 is a positive input terminal. Connecting the direct current bus to the input of the first voltage compensation unit 204 is actually using output of the second string 2022 as a power supply of the first voltage compensation unit 204, thereby avoiding an external connection to another power supply. In this way, a quantity of power supplies of the system can be reduced, and system simplicity can be improved.

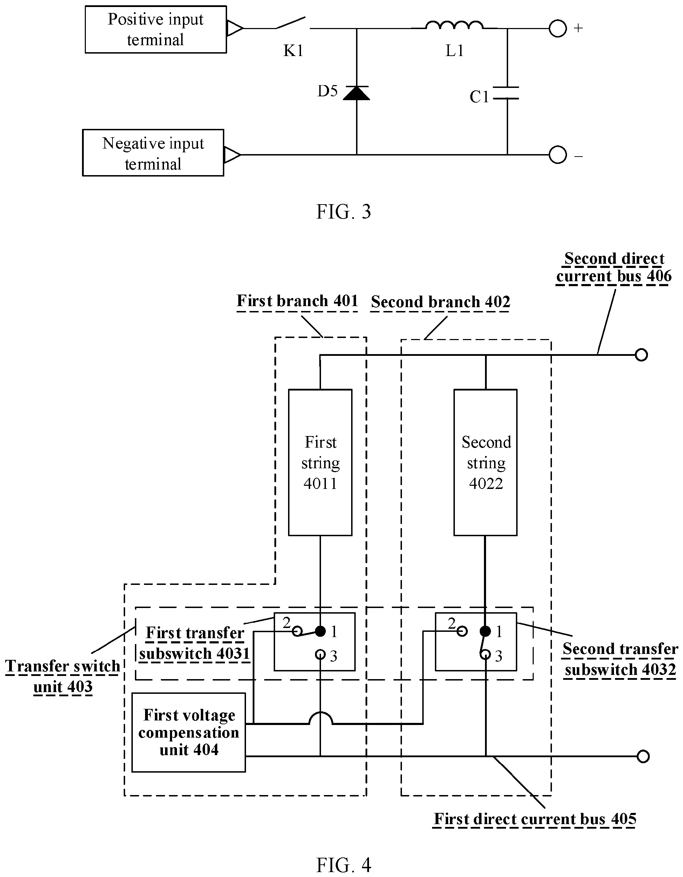

For example, the first voltage compensation unit 204 may include a non-isolated buck conversion circuit. FIG. 3 is a diagram of a circuit principle of a voltage compensation unit according to an embodiment of this application. As shown in FIG. 3, the non-isolated buck conversion circuit (in other words, a buck circuit) includes a switch K1, an inductor 11, a diode D5, and a capacitor C1. It can be understood that input and output of the non-isolated buck conversion circuit are electrically connected. This is different from an isolated circuit in which input and output of a conversion circuit are electrically isolated by using a transformer and the like. The switch K1 may be an insulated gate bipolar transistor (Insulated Gate Bipolar Transistor, IGBT) and an anti-parallel diode of the insulated gate bipolar transistor, or a metal-oxide-semiconductor field-effect transistor (Metal-Oxide-Semiconductor Field-Effect Transistor, MOSFET). In the conventional technology shown in FIG. 1, each string is connected to a DC-DC converter in series, and when input of each DC-DC converter is connected to a direct current bus, and each DC-DC converter operates, an input power supply of each DC-DC converter actually includes a string of a branch on which the DC-DC converter is located. That is, both output and the input of the DC-DC converter are connected to the string. Therefore, the input and output of the converter need to be isolated by using an isolated converter. Otherwise, the converter cannot normally operate. However, the isolated converter has a large volume and low efficiency. In this embodiment, the two strings share one voltage compensation unit, and the voltage compensation unit uses a string requiring no voltage compensation as an input power supply, and performs output to a string requiring voltage compensation. Therefore, the non-isolated buck conversion circuit with a small volume and high efficiency may be used, thereby reducing a system volume and improving system efficiency.

For example, the first voltage compensation unit 204 may also use an isolated resonant circuit, an isolated phase shift circuit, or a flyback circuit.

Specific implementations of the transfer switch unit are described below by using examples with reference to FIG. 4 to FIG. 9.

FIG. 4 is a schematic diagram of a system architecture of a power supply system according to an embodiment of this application. As shown in FIG. 4, the power supply system in this embodiment may include a first branch 401 on which a first string 4011 is located, a second branch 402 on which a second string 4022 is located, a transfer switch unit 403, and a first voltage compensation unit 404.

The transfer switch unit 403 includes a first transfer subswitch 4031 between the first voltage compensation unit 404 and the first string 4011, and the transfer switch unit 403 controls, based on a voltage compensation enabling signal received from a controller (not shown in the figure), the first transfer subswitch 4031 to connect the first voltage compensation unit 404 and the first string 4011. For example, the controller may be located in a photovoltaic inverter control module included in the power supply system in this embodiment. Optionally, the controller generates the voltage compensation enabling signal, and may send the voltage compensation enabling signal to the transfer switch unit 403 or at least one processor. The processor forwards the voltage compensation enabling signal to the transfer switch unit 403.

The first transfer subswitch 4031 may be a contact switch, and includes a first terminal, a second terminal, and a third terminal. The first terminal of the first transfer subswitch 4031 is connected to one terminal of the first string 4011. The second terminal of the first transfer subswitch 4031 is connected to a second output terminal of the first voltage compensation unit 404. The third terminal of the first transfer subswitch 4031 and a first output terminal of the first voltage compensation unit 404 are separately connected to a first direct current bus 405. The other terminal of the first string 4011 and the other terminal of the second string 4022 are separately connected to a second direct current bus 406. The first direct current bus 405 may be a positive direct current bus or a negative direct current bus. That the transfer switch unit 403 controls the first transfer subswitch 4031 to connect the first voltage compensation unit 404 and the first string 4011 is specifically controlling the first terminal of the first transfer subswitch 4031 to connect to the second terminal.

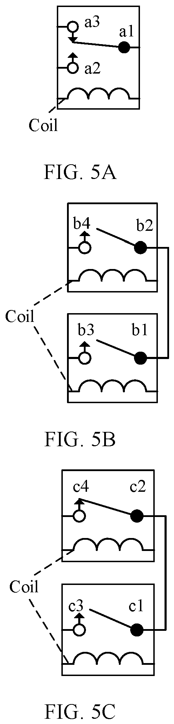

In a possible implementation, the first transfer subswitch 4031 may include a switch with a single change-over contact shown in FIG. 5A. The switch with a single change-over contact includes two static contacts a2 and a3, one moving contact a1, and one coil, a1 is connected to the first terminal of the first transfer subswitch 4031, a2 is connected to the second terminal of the first transfer subswitch 4031, and a3 is connected to the third terminal of the first transfer subswitch 4031. The transfer switch unit 403 controls a current to flow through the coil of the switch with a single change-over contact, so that a1 comes into contact with a2, that is, the first terminal of the first transfer subswitch 4031 is connected to the second terminal, thereby connecting the first voltage compensation unit 404 and the first string 4011. For example, in a default state, no current flows through the coil of the switch with a single change-over contact, and a1 comes into contact with a3, that is, in the default state of the first transfer subswitch 4031, the first terminal is connected to the third terminal, to connect the first string 4011 and the first direct current bus 405.

In another possible implementation, the first transfer subswitch 4031 may include two switches with a single normally-open contact shown in FIG. 5B. Each switch with a single normally-open contact includes one static contact, one moving contact, and one coil. It can be understood that the static contact is disconnected from the moving contact when the switch with a single normally-open contact is in a default state. The moving contacts of the two switches with a single normally-open contact are respectively b1 and b2, and the static contacts of the two switches with a single normally-open contact are respectively b3 and b4. Both b1 and b2 are connected to the first terminal of the first transfer subswitch 4031, and b3 and b4 may be connected to either the second terminal or the third terminal of the first transfer subswitch 4031. In this embodiment, an example in which b3 is connected to the second terminal of the first transfer subswitch 4031 and b4 is connected to the third terminal of the first transfer subswitch 4031 is used. The transfer switch unit 403 controls a current to flow through the coil of the switch with a single normally-open contact in which b3 is located, so that b1 comes into contact with b3, that is, the first terminal of the first transfer subswitch 4031 is connected to the second terminal, to connect the first voltage compensation unit 404 and the first string 4011. For example, in a default state, the transfer switch unit 403 controls a current to flow through the coil of the switch with a single normally-open contact in which b4 is located, so that b2 comes into contact with b4, that is, the first terminal of the first transfer subswitch 4031 is connected to the third terminal, to connect the first string 4011 and the first direct current bus 405.

In still another possible implementation, the first transfer subswitch 4031 may include one switch with a single normally-open contact and one switch with a single normally-closed contact that are shown in FIG. 5C, and each of the switch with a single normally-open contact and the switch with a single normally-closed contact includes one static contact, one moving contact, and one coil. A difference between the switch with a single normally-open contact and the switch with a single normally-closed contact is as follows: When the switch with a single normally-closed contact is in a default state, the static contact is in contact with the moving contact. The moving contact of the switch with a single normally-closed contact is c2, and the static contact is c4; and the moving contact of the switch with a single normally-open contact is c1, and the static contact is c3. Both c1 and c2 are connected to the first terminal of the first transfer subswitch 4031, c3 is connected to the second terminal of the first transfer subswitch 4031, and c4 is connected to the third terminal of the first transfer subswitch 4031. The transfer switch unit 403 controls a current to flow through the coil of the switch with a single normally-open contact in which c3 is located, so that c1 comes into contact with c3, that is, the first terminal of the first transfer subswitch 4031 is connected to the second terminal, thereby connecting the first voltage compensation unit 404 and the first string 4011. When the switch with a single normally-closed contact is in a default state, c2 is in contact with c4, that is, the first terminal of the first transfer subswitch 4031 is connected to the third terminal. Therefore, when the first voltage compensation unit 404 is connected to the first string 4011, the transfer switch unit 403 needs to further control a current to flow through the coil of the switch with a single normally-closed contact in which c4 is located, so that c2 is not in contact with c4, that is, the first terminal of the first transfer subswitch 4031 is disconnected from the third terminal, thereby disconnecting the first string 4011 from the first direct current bus 405.

Further, in an optional implementation, the transfer switch unit 403 may further include a second transfer subswitch 4032, and the transfer switch unit 403 controls, based on the received voltage compensation enabling signal, the second transfer subswitch 4032 to connect the first direct current bus 405 in the power supply system and the second string 4022. The second transfer subswitch 4032 may be a contact switch, and includes a first terminal, a second terminal, and a third terminal. The first terminal of the second transfer subswitch 4032 is connected to one terminal of the second string 4022. The second terminal is connected to the second output terminal of the first voltage compensation unit 404. The third terminal is connected to the first direct current bus 405. Different from the first transfer subswitch 4031 connecting the first voltage compensation unit 404 and the first string 4011, the second transfer subswitch 4032 connects the second string 4022 and the first direct current bus 405. For a specific structure of the second transfer subswitch 4032, refer to the descriptions of the first transfer subswitch 4031 in FIG. 5A to FIG. 5C. Details are not described herein again. It can be understood that, the first transfer subswitch 4031 and the second transfer subswitch 4032 may be integrated into one switching device, or may be separately disposed. Disposing positions of the transfer subswitches are not limited in this embodiment.

To sum up, the first transfer subswitch 4031 and/or the second transfer subswitch 4032 may be implemented as any one in FIG. 5A to FIG. 5C, to control the first voltage compensation unit 404 to connect to the first branch 401 instead of the second branch 402, to achieve the beneficial effects described in FIG. 2. Details are not described herein again.

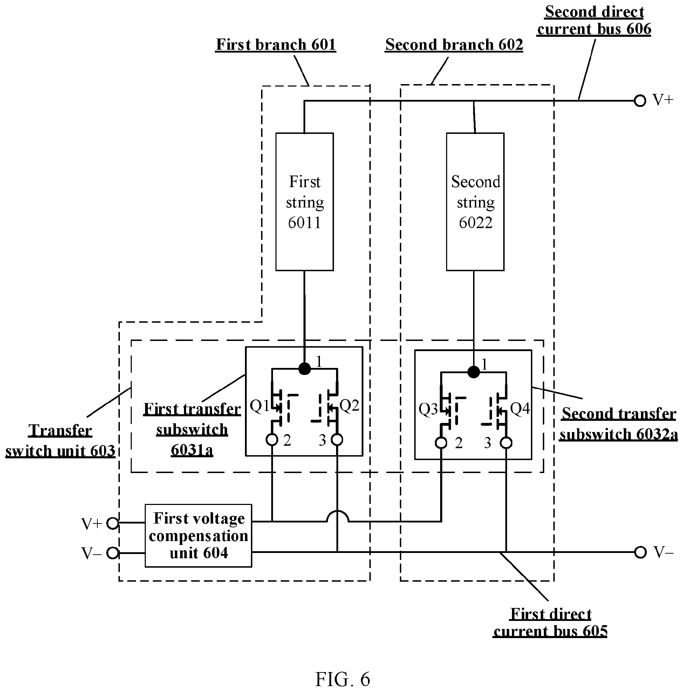

FIG. 6 is a schematic diagram of a system architecture of another power supply system according to an embodiment of this application. As shown in FIG. 6, the power supply system in this embodiment may include a first branch 601 on which a first string 6011 is located, a second branch 602 on which a second string 6022 is located, a transfer switch unit 603, and a first voltage compensation unit 604.

The transfer switch unit 603 includes a first transfer subswitch 6031a between the first voltage compensation unit 604 and the first string 6011, and the transfer switch unit 603 controls, based on a voltage compensation enabling signal received from a controller (not shown in the figure), the first transfer subswitch 6031a to connect the first voltage compensation unit 604 and the first string 6011. For example, the controller may be located in a photovoltaic inverter control module included in the power supply system in this embodiment. Optionally, the controller generates the voltage compensation enabling signal, and may send the voltage compensation enabling signal to the transfer switch unit 603 or at least one processor. The processor forwards the voltage compensation enabling signal to the transfer switch unit 603.

The first transfer subswitch 6031a may be a semiconductor switch, and includes a first terminal, a second terminal, and a third terminal. The first terminal of the first transfer subswitch 6031a is connected to one terminal of the first string 6011. The second terminal of the first transfer subswitch 6031a is connected to a second output terminal of the first voltage compensation unit 604. The third terminal of the first transfer subswitch 6031a and a first output terminal of the first voltage compensation unit 604 are separately connected to a first direct current bus 605. The other terminal of the first string 6011 and the other terminal of the second string 6022 are separately connected to a second direct current bus 606.

When the first direct current bus 605 is a negative direct current bus V-, in a possible implementation, the first transfer subswitch 6031a in this embodiment may include a first semiconductor switch and a second semiconductor switch that are shown in FIG. 6. The first semiconductor switch is Q1, and is configured to connect the first voltage compensation unit 604 and the first string 6011. The second semiconductor switch is Q2, and is configured to disconnect the first string 6011 from the first direct current bus 605.

An example in which each of the first semiconductor switch Q1 and the second semiconductor switch Q2 is a MOSFET is used. A source of the first semiconductor switch Q1 and a drain of the second semiconductor switch Q2 are separately connected to the first terminal of the first transfer subswitch 6031a. A drain of the first semiconductor switch Q1 is connected to the second terminal of the first transfer subswitch 6031a, and a source of the second semiconductor switch Q2 is connected to the third terminal of the first transfer subswitch 6031a. The transfer switch unit 603 outputs a drive signal to the first semiconductor switch Q1 based on the received voltage compensation enabling signal, and controls the first semiconductor switch Q1 to switch on, to connect the first voltage compensation unit 604 and the first string 6011; and stops outputting a drive signal to the second semiconductor switch Q2, and controls the second semiconductor switch Q2 to switch off, to disconnect the first string 6011 from the first direct current bus 605.

The semiconductor switches are used as the transfer switch unit. Compared with a contact switch, the semiconductor switches can reduce a volume of the power supply system, and perform switch-on and switch-off operations at a high voltage and a high current, thereby improving system security.

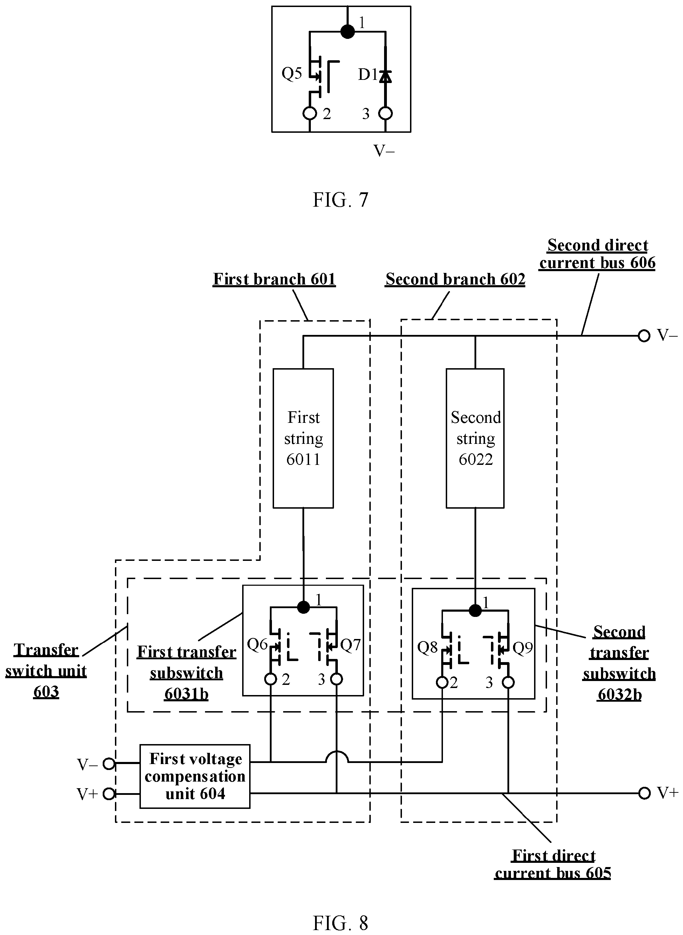

When the first direct current bus 605 is a negative direct current bus V-, in another possible implementation, the first transfer subswitch 6031a may include a third semiconductor switch and a diode that are shown in FIG. 7. The third semiconductor switch is Q5, and is configured to connect the first voltage compensation unit 604 and the first string 6011; and the diode is D1, and is in a reverse cut-off state when the third semiconductor switch Q5 connects the first voltage compensation unit 604 and the first string 6011, to disconnect the first string 6011 from the first direct current bus 605. A source of the third semiconductor switch Q5 and a cathode of the diode D1 are separately connected to the first terminal of the first transfer subswitch 6031a, a drain of the third semiconductor switch Q5 is connected to the second terminal of the first transfer subswitch 6031a, and an anode of the diode D1 is connected to the third terminal of the first transfer subswitch 6031a. The transfer switch unit 603 outputs a drive signal to the third semiconductor switch Q5 based on the received voltage compensation enabling signal, and controls the third semiconductor switch Q5 to switch on, to connect the first voltage compensation unit 604 and the first string 6011. In this case, the diode D1 is in the reverse cut-off state, and a specific implementation principle is as follows: The third semiconductor switch Q5 is in a switched-on state. As the first direct current bus 605 is a negative direct current bus V-, a first output terminal of the first voltage compensation unit 604 that is connected to the first direct current bus 605 is a negative output terminal, and a second output terminal is a positive output terminal. A positive voltage output by the positive output terminal of the first voltage compensation unit 604 is exerted on the first terminal of the first transfer subswitch 6031a, that is, the cathode terminal of the diode D1, after flowing through the third semiconductor switch Q5. A negative voltage output by the negative output terminal of the first voltage compensation unit 604 is exerted on the anode terminal of the diode D1, to enable the diode D1 to be reversely cut off, that is, the first string 6011 is disconnected from the first direct current bus 605.

A combination of the semiconductor switch and the diode is used as the transfer switch unit. Compared with the use of two semiconductor switches, system costs are further reduced.

When the first direct current bus 605 is a positive direct current bus V+, FIG. 8 is a schematic diagram of a system architecture of another power supply system according to an embodiment of this application. In a possible implementation, the first transfer subswitch 6031a is replaced with a first transfer subswitch 6031b shown in FIG. 8, the first transfer subswitch 6031b includes a fourth semiconductor switch and a fifth semiconductor switch, the fourth semiconductor switch is Q6, and the fifth semiconductor switch is Q7. A drain of the fourth semiconductor switch Q6 and a source of the fifth semiconductor switch Q7 are separately connected to a first terminal of the first transfer subswitch 6031b, a source of the fourth semiconductor switch Q6 is connected to a second terminal of the first transfer subswitch 6031b, and a drain of the fifth semiconductor switch Q7 is connected to a third terminal of the first transfer subswitch 6031b. The transfer switch unit 603 outputs a drive signal to the fourth semiconductor switch Q6 based on the received voltage compensation enabling signal, and controls the fourth semiconductor switch Q6 to switch on, to connect the first voltage compensation unit 604 and the first string 6011; and stops outputting a drive signal to the fifth semiconductor switch Q7, and controls the fifth semiconductor switch Q7 to switch off, to disconnect the first string 6011 from the first direct current bus 605.

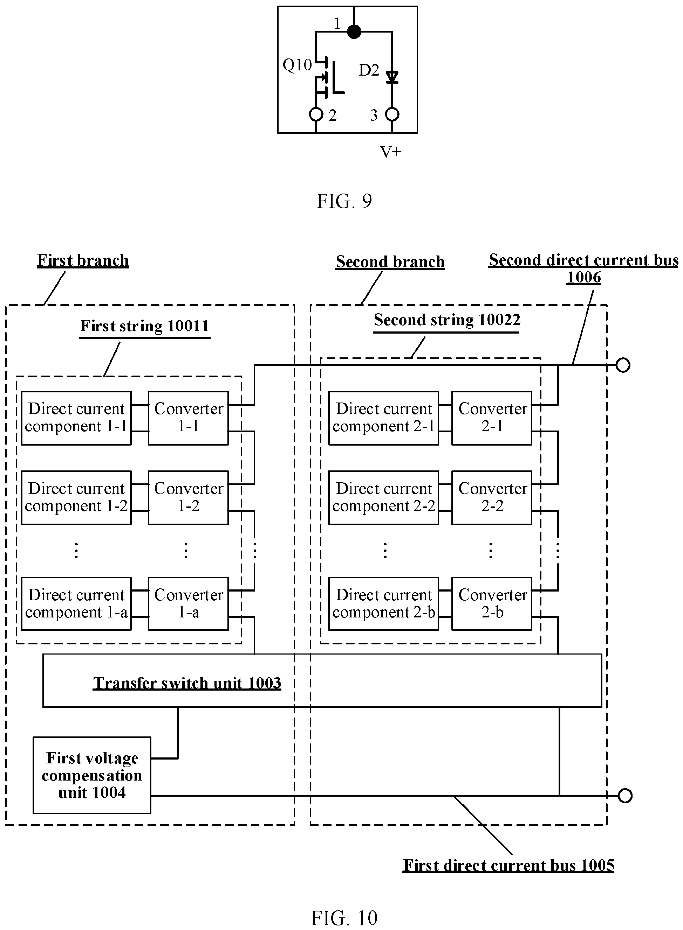

When the first direct current bus 605 is a positive direct current bus V+, in another possible implementation, the first transfer subswitch 6031b may include a sixth semiconductor switch and a diode that are shown in FIG. 9. The sixth semiconductor switch is Q10, the diode is D2, a drain of the sixth semiconductor switch Q10 and an anode of the diode D2 are separately connected to a first terminal of the first transfer subswitch 6031b, a source of the sixth semiconductor switch Q10 is connected to a second terminal of the first transfer subswitch 6031b, and a cathode of the diode D2 is connected to a third terminal of the first transfer subswitch 6031b. The transfer switch unit 603 outputs a drive signal to the sixth semiconductor switch Q10 based on the received voltage compensation enabling signal, and controls the sixth semiconductor switch Q10 to switch on, to connect the first voltage compensation unit 604 and the first string 6011. In this case, the diode D2 is in a reverse cut-off state, and the specific implementation principle is as follows: The sixth semiconductor switch Q10 is in a switched-on state. As the first direct current bus 605 is a positive direct current bus, a first output terminal of the first voltage compensation unit 604 that is connected to the first direct current bus 605 is a positive output terminal, and a second output terminal is a negative output terminal. A negative voltage output by the negative output terminal of the first voltage compensation unit 604 is exerted on the first terminal of the first transfer subswitch 6031b, that is, the anode terminal of the diode D2, after flowing through the sixth semiconductor switch Q10. A positive voltage output by the positive output terminal of the first voltage compensation unit 604 is exerted on the cathode terminal of the diode D2, to enable the diode D2 to be reversely cut off, that is, the first string 6011 is disconnected from the first direct current bus 605.

A connection relationship between the semiconductor switches is changed, to adapt to the two cases in which the first direct current bus 605 is a positive direct current bus or a negative direct current bus, thereby improving applicability of the power supply system.

Further, in an optional implementation, when the first direct current bus 605 is a negative direct current bus V-, the transfer switch unit 603 may further include a second transfer subswitch 6032a, and the transfer switch unit 603 controls, based on the received voltage compensation enabling signal, the second transfer subswitch 6032a to connect the first direct current bus 605 in the power supply system and the second string 6022. The second transfer subswitch 6032a may be a semiconductor switch, and includes a first terminal, a second terminal, and a third terminal. The first terminal of the second transfer subswitch 6032a is connected to one terminal of the second string. The second terminal is connected to a second output terminal of the first voltage compensation unit 604. The third terminal is connected to the first direct current bus 605. Different from the first transfer subswitch 6031a connecting the first voltage compensation unit 604 and the first string 6011, the second transfer subswitch 6032a connects the second string 6022 and the first direct current bus 605. For a specific structure of the second transfer subswitch 6032a, refer to the descriptions of the first transfer subswitch 6031a in FIG. 6 and FIG. 7. Details are not described herein again.

Further, in another optional implementation, when the first direct current bus 605 is a positive direct current bus V+, the transfer switch unit 603 may further include a second transfer subswitch 6032b, and the transfer switch unit 603 controls, based on the received voltage compensation enabling signal, the second transfer subswitch 6032b to connect the first direct current bus 605 and the second string 6022. The second transfer subswitch 6032b may be a semiconductor switch, and includes a first terminal, a second terminal, and a third terminal. The first terminal of the second transfer subswitch 6032b is connected to one terminal of the second string. The second terminal is connected to a second output terminal of the first voltage compensation unit 604. The third terminal is connected to the first direct current bus 605. Different from the first transfer subswitch 6031b connecting the first voltage compensation unit 604 and the first string 6011, the second transfer subswitch 6032b connects the second string 6022 and the first direct current bus 605. For a specific structure of the second transfer subswitch 6032b, refer to the descriptions of the first transfer subswitch 6031b in FIG. 8 and FIG. 9. Details are not described herein again.

In a feasible implementation, the transfer switch unit in this application may include at least one contact switch and/or at least one semiconductor switch. In other words, a specific structure of the first transfer subswitch may be different from a specific structure of the second transfer subswitch. For example, the first transfer subswitch is a contact switch and the second transfer subswitch is a semiconductor switch, or vice versa.

It can be understood that the semiconductor switches Q1, Q2, Q3, Q4, and the like may be MOSFETs, or may be IGBTs and anti-parallel diodes of the IGBTs. A MOSFET is used as an example for description above with reference to each of FIG. 4 to FIG. 9. If Q1, Q2, Q3, Q4, and the like are IGBTs and anti-parallel diodes of the IGBTs, a source of the MOSFET is replaced with an emitter of the IGBT, a drain of the MOSFET is replaced with a collector of the IGBT, an anode of the anti-parallel diode is connected to the emitter of the IGBT, and a cathode is connected to the collector of the IGBT.

FIG. 10 is a schematic diagram of a system architecture of still another power supply system according to an embodiment of this application. In this embodiment, each string includes at least one direct current component and a converter corresponding to the direct current component, and the converter is configured to adjust an operating state of the corresponding direct current component. As shown in FIG. 10, an output terminal of a direct current component 1-1 is connected to an input terminal of a converter 1-1, an output terminal of a direct current component 1-2 is connected to an input terminal of a converter 1-2, an output terminal of a direct current component 1-a is connected to an input terminal of a converter 1-a, output terminals of the converters 1-1, 1-2, ..., and 1-a are sequentially connected in series to form a first string 10011, a first output terminal of the converter 1-1 is connected to a second direct current bus 1006, and a second output terminal of the converter 1-a is connected to a transfer switch unit 1003, where a is not less than 1. Similarly, an output terminal of a direct current component 2-1 is connected to an input terminal of a converter 2-1, an output terminal of a direct current component 2-2 is connected to an input terminal of a converter 2-2, an output terminal of a direct current component 2-b is connected to an input terminal of a converter 2-b, output terminals of the converters 2-1, 2-2, ..., and 2-b are sequentially connected in series to form a second string 10022, a first output terminal of the converter 2-1 is connected to the second direct current bus 1006, and a second output terminal of the converter 2-b is connected to the transfer switch unit 1003, where b is not less than 1. Optionally, b may be the same as or different from a.

Each of the foregoing converters converts an input voltage into a constant voltage through boosting or bucking. That is, voltage adjustment is performed on the direct current component in the string by using the converter, to optimize an operating state of the direct current component.

It can be understood that the first direct current bus 1005 may be a negative direct current bus or a positive direct current bus. When the first direct current bus 1005 is a negative direct current bus, a first output terminal of the converter is a positive output terminal, and a second output terminal is a negative output terminal. When the first direct current bus 1005 is a positive direct current bus, a first output terminal of the converter is a negative output terminal, and a second output terminal is a positive output terminal.

The direct current component may be a photovoltaic module, in other words, a solar cell assembly. This application may further be applied to an energy storage scenario. To be specific, the direct current component may be an energy storage battery, such as a nickel-cadmium battery, a nickel-metal hydride battery, a lithium-ion battery, or a lithium-polymer battery.

It can be understood that this embodiment may be applied to any feasible implementation of this application. The converter is correspondingly disposed for the direct current component in the string, to adjust the operating state of the corresponding direct current component, thereby optimizing the entire power supply system.

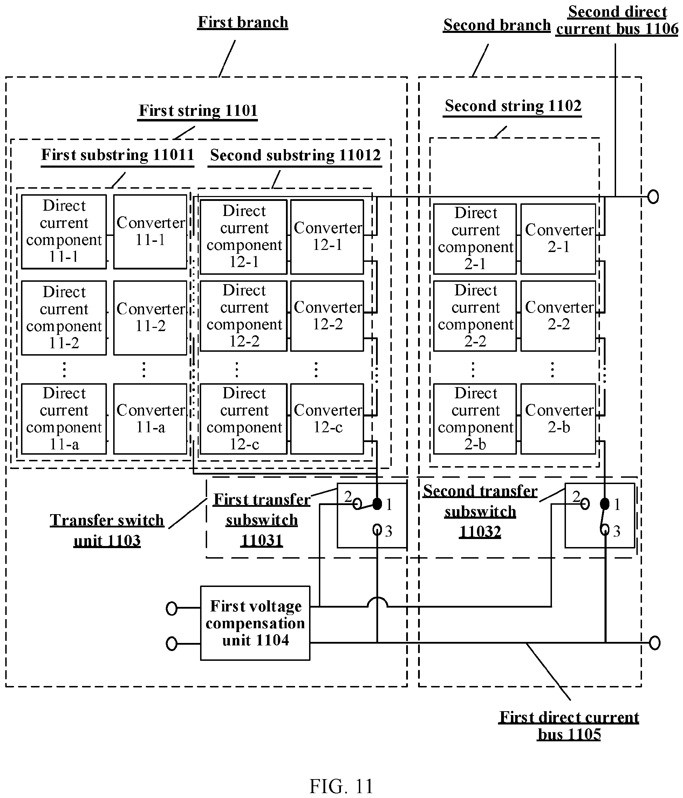

FIG. 11 is a schematic diagram of a system architecture of yet another power supply system according to an embodiment of this application. In FIG. 11, that a first string 1101 includes two substrings 11011 and 11012 is used as an example rather than an enumeration. It should be understood that the first string 1101 includes but is not limited to two substrings. In other words, the first string 1101 may include at least two substrings.

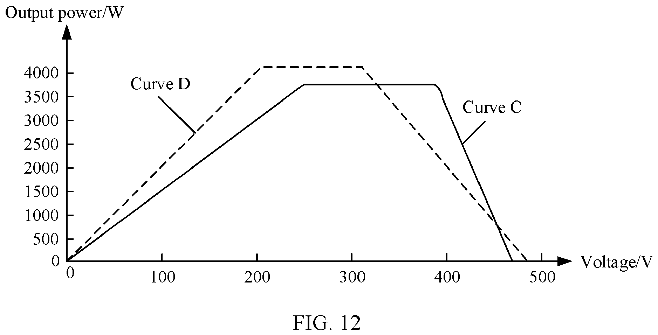

The first substring 11011 is connected to the second substring 11012 in parallel to form the first string 1101. Output voltage ranges corresponding to maximum power points of the first substring 11011 and the second substring 11012 at least partially overlap. For example, a voltage-power curve of the first substring 11011 may be a curve C in FIG. 12, and a voltage-power curve of the second substring 11012 may be a curve D in FIG. 12. The output voltage ranges corresponding to the respective maximum power points of the first substring 11011 and the second substring 11012 overlap between 250 V and 310 V In this case, it is considered that a degree of adaptation between the first substring 11011 and the second substring 11012 is relatively high. For example, if an output voltage of the first substring 11011 is 280 V, and an output voltage of the second substring 11012 is 300 V, although the two output voltages are different, the output voltage of the first substring 11011 may be adjusted to 300 V through maximum power point track (maximum power point track, MPPT) control, or the output voltage of the second substring 11012 may be adjusted to 280 V through MPPT control, or the output voltage of the first substring 11011 may be adjusted to 290 V through MPPT control and the output voltage of the second substring 11012 may be adjusted to 290 V through MPPT control, or the like. MPPT control may be understood as continuously adjusting an output voltage of a target string based on an operating environment (such as light intensity or an ambient temperature) of the target string, to enable the target string to output a maximum power. As an example rather than an enumeration, in MPPT control above, the output voltage of the first substring 11011 and/or the output voltage of the second substring 11012 are/is adjusted to 300 V, 280 V, or 290 V That is, the output voltage of the first substring 11011 and the output voltage of the second substring 11012 may be adjusted to be the same through MPPT control, so that a first transfer subswitch 11031 and a first voltage compensation unit 1104 are shared. In this embodiment, two substrings with a relatively high degree of adaptation are connected in parallel, to share one transfer switch unit and one voltage compensation unit, so that system costs can be further reduced.

In a feasible implementation, the first substring 11011 and/or the second substring 11012 may include at least one direct current component and a converter corresponding to the direct current component. For a specific implementation, refer to the foregoing embodiment described with reference to FIG. 10. Details are not described herein again.

In an optional implementation, a first direct current bus 1105 may be a negative direct current bus, and a second direct current bus 1106 may be a positive direct current bus; or a first direct current bus 1105 may be a positive direct current bus, and a second direct current bus 1106 may be a negative direct current bus.

In a feasible implementation, a second string 1102 may also include at least two substrings, and the substrings share a second transfer subswitch 11032 and the first voltage compensation unit 1104. That is, each string in the power supply system may include at least two substrings, and not only one of the strings may include substrings.

It can be understood that a quantity of substrings included in a string depends on whether output voltage ranges corresponding to maximum power points of the substrings overlap. If the output voltage ranges corresponding to the maximum power points overlap, the substrings may be connected in parallel to share one voltage compensation unit and one transfer subswitch.

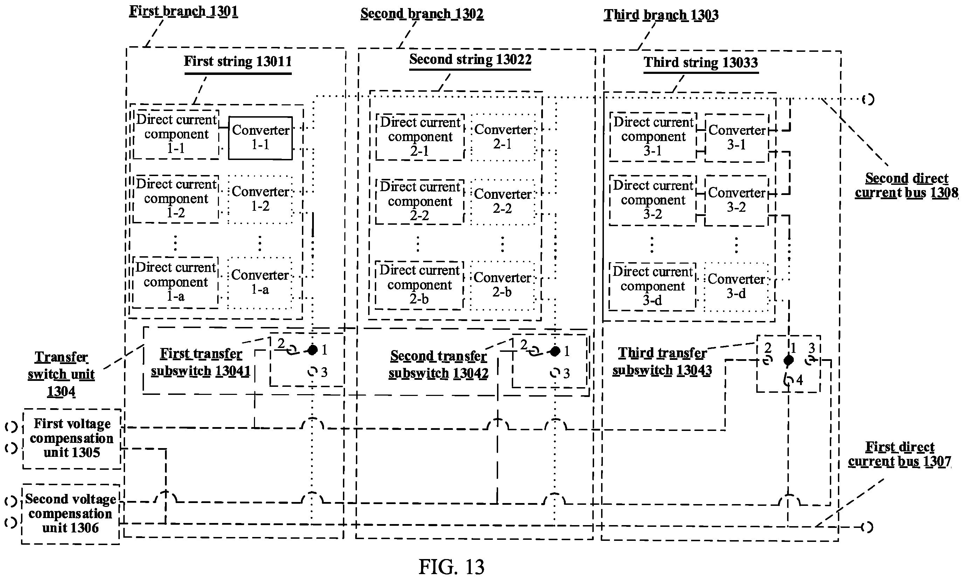

FIG. 13 is a schematic diagram of a system architecture of still yet another power supply system according to an embodiment of this application. In FIG. 13, that the power supply system includes three branches on which three strings are located and two voltage compensation units is used as an example rather than an enumeration. It should be understood that the power supply system may include N branches on which N strings are located and M voltage compensation units, where N and M are both positive integers, and M is less than N. As shown in FIG. 13, the power supply system in this embodiment may include a first branch 1301 on which a first string 13011 is located, a second branch 1302 on which a second string 13022 is located, a third branch 1303 on which a third string 13033 is located, a transfer switch unit 1304, a first voltage compensation unit 1305, and a second voltage compensation unit 1306. The transfer switch unit 1304 may include a first transfer subswitch 13041, a second transfer subswitch 13042, and a third transfer subswitch 13043. Each transfer subswitch includes a first terminal, a second terminal, and a third terminal. A first terminal of the first transfer subswitch 13041 is connected to one terminal of the first string 13011, a second terminal of the first transfer subswitch 13041 is connected to a second output terminal of the first voltage compensation unit 1305, and a third terminal of the first transfer subswitch 13041 and a first output terminal of the first voltage compensation unit 1305 are separately connected to a first direct current bus 1307. A first terminal of the second transfer subswitch 13042 is connected to one terminal of the second string 13022, a second terminal of the second transfer subswitch 13042 is connected to a second output terminal of the second voltage compensation unit 1306, and a third terminal of the second transfer subswitch 13042 and a first output terminal of the second voltage compensation unit 1306 are separately connected to the first direct current bus 1307. A first terminal of the third transfer subswitch 13043 is connected to one terminal of the third string 13033, a second terminal of the third transfer subswitch 13043 is connected to the second output terminal of the first voltage compensation unit 1305, a third terminal of the third transfer subswitch 13043 is connected to the second output terminal of the second voltage compensation unit 1306, and a fourth terminal of the third transfer subswitch 13043 is connected to the first direct current bus 1307. The other terminal of the first string 13011, the other terminal of the second string 13022, and the other terminal of the third string 13033 are separately connected to a second direct current bus 1308.

A controller obtains an operating state parameter of the first string 13011, an operating state parameter of the second string 13022, and an operating state parameter of the third string 13033, and generates a voltage compensation enabling signal based on the operating state parameter of the first string 13011, the operating state parameter of the second string 13022, and the operating state parameter of the third string 13033. During specific implementation, when output voltages of the first string 13011, the second string 13022, and the third string 13033 are different, the controller generates a voltage compensation enabling signal, and sends the voltage compensation enabling signal to the transfer switch unit 1304. The transfer switch unit 1304 respectively connects all or some of the voltage compensation units to some branches based on the voltage compensation enabling signal. For example, the output voltage of the first string 13011 and the output voltage of the second string 13022 may be relatively small, and the transfer switch unit 1304 controls the first voltage compensation unit 1305 to connect to the first branch 1301, and the second voltage compensation unit 1306 to connect to the second branch 1302. Alternatively, the output voltage of the first string 13011 and the output voltage of the third string 13033 are relatively small, and the transfer switch unit 1304 controls the first voltage compensation unit 1305 to connect to the first branch 1301, and the second voltage compensation unit 1306 to connect to the third branch 1303. Alternatively, the output voltage of the second string 13022 and the output voltage of the third string 13033 are relatively small, and the transfer switch unit 1304 controls the second voltage compensation unit 1306 to connect to the second branch 1302, and the first voltage compensation unit 1305 to connect to the third branch 1303. Alternatively, the output voltage of the first string 13011 is relatively small, the transfer switch unit 1304 controls the first voltage compensation unit 1305 to connect to the first branch 1301, and in this case, an output voltage of the second voltage compensation unit 1306 may be zero. Alternatively, the output voltage of the second string 13022 is relatively small, the transfer switch unit 1304 controls the second voltage compensation unit 1306 to connect to the second branch 1302, and in this case, an output voltage of the first voltage compensation unit 1305 may be zero. Alternatively, the output voltage of the third string 13033 is relatively small, the transfer switch unit 1304 controls the first voltage compensation unit 1305 or the second voltage compensation unit 1306 to connect to the third branch 1303, and in this case, an output voltage of a voltage compensation unit that does not connect to the third branch 1303 may be zero.

The voltage compensation unit is connected to a branch requiring voltage compensation, instead of a branch requiring no voltage compensation, thereby preventing the voltage compensation unit from causing an unnecessary system loss in the branch requiring no voltage compensation. In addition, a quantity of voltage compensation units is less than a quantity of strings. Compared with a conventional technology in which a quantity of voltage compensation units is equal to a quantity of strings, the quantity of voltage compensation units can be reduced, and system costs can be reduced.

For example, in a default state, the first branch 1301, the second branch 1302, and the third branch 1303 may not connect to any voltage compensation unit.

In addition, when the output voltage of the first string 13011, the output voltage of the second string 13022, and the output voltage of the third string 13033 are the same, based on the operating state parameter of the first string 13011, the operating state parameter of the second string 13022, and the operating state parameter of the third string 13033, the controller may not generate the voltage compensation enabling signal or may generate a default voltage compensation signal. When receiving no voltage compensation enabling signal or the default voltage compensation signal, the transfer switch unit 1304 controls the voltage compensation unit to connect to none of the first branch 1301, the second branch 1302, and the third branch 1303.

In an optional implementation, the controller in this embodiment may be disposed in a photovoltaic inverter control module included in the power supply system.

Further, the controller may further determine at least one voltage compensation reference value based on the operating state parameter of the first string 13011, the operating state parameter of the second string 13022, and the operating state parameter of the third string 13033, and send a corresponding voltage compensation reference value to each of the first voltage compensation unit 1305 and the second voltage compensation unit 1306, so that the first voltage compensation unit 1305 compensates for the first branch 1301 or the third branch 1303 based on the received voltage compensation reference value, and the second voltage compensation unit 1306 compensates for the second branch 1302 or the third branch 1303 based on the received voltage compensation reference value. For example, a value of the output voltage of the first string 13011 is 200 V, a value of the output voltage of the second string 13022 is 300 V, and a value of the output voltage of the third string 13033 is 250 V In this case, a voltage compensation value sent by the controller to the first voltage compensation unit 1305 is 100 V, and a voltage compensation value sent to the second voltage compensation unit 1306 is 50 V

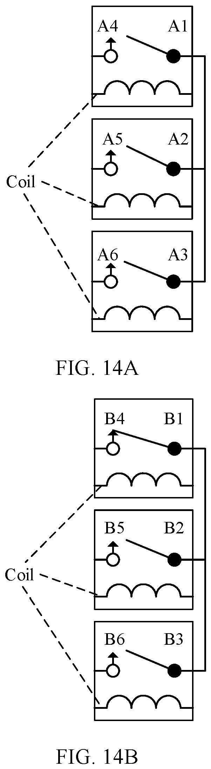

For specific structures and specific implementations of the first transfer subswitch 13041 and the second transfer subswitch 13042, refer to embodiments described in FIG. 4 to FIG. 9. Details are not described herein again. Examples of a specific structure and a specific implementation of the third transfer subswitch 13043 are described below with reference to FIG. 14A to FIG. 15D.

In a feasible implementation, the third transfer subswitch 13043 may be a contact switch. Refer to FIG. 14A and FIG. 14B.

In another possible implementation, the third transfer subswitch 13043 may include three switches with a single normally-open contact shown in FIG. 14A. Each switch with a single normally-open contact includes one static contact, one moving contact, and one coil. It can be understood that the static contact is disconnected from the moving contact when the switch with a single normally-open contact is in a default state. The moving contacts of the three switches with a single normally-open contact are respectively A1, A2, and A3, and the static contacts of the three switches with a single normally-open contact are respectively A4, A5, and A6. A1, A2, and A3 are all connected to the first terminal of the third transfer subswitch 13043. A4, A5, and A6 may be connected to any one of the fourth terminal, the second terminal, or the third terminal of the third transfer subswitch 13043. The transfer switch unit 1304 controls whether a current flows through the coil of each of the switch with a single normally-open contact, to control whether contacts are in contact, thereby controlling whether ports of the third transfer subswitch 13043 are connected. In this embodiment, an example in which A4 is connected to the fourth terminal of the third transfer subswitch 13043, A5 is connected to the second terminal of the third transfer subswitch 13043, and A6 is connected to the third terminal of the third transfer subswitch 13043 is used. The transfer switch unit 1304 controls a current to flow through a coil on which A5 is located, so that A2 comes into contact with A5, that is, the first terminal of the third transfer subswitch 13043 is connected to the second terminal, so that the first voltage compensation unit 1305 and the third string 13033 are connected, and the first voltage compensation unit 1305 is connected to the third branch 1303. Alternatively, the transfer switch unit 1304 controls a current to flow through a coil on which A6 is located, so that A3 comes into contact with A6, that is, the first terminal of the third transfer subswitch 13043 is connected to the third terminal, so that the second voltage compensation unit 1306 and the third string 13033 are connected, and the second voltage compensation unit 1306 is connected to the third branch 1303. Alternatively, the transfer switch unit 1304 controls a current to flow through a coil on which A4 is located, so that A1 comes into contact with A4, that is, the first terminal of the third transfer subswitch 13043 is connected to the fourth terminal, so that the third string 13033 and the first direct current bus 1307 are connected, and the third branch 1303 is not connected to any voltage compensation unit.

In still another possible implementation, the third transfer subswitch 13043 may include one switch with a single normally-closed contact and two switches with a single normally-open contact shown in FIG. 14B. Each of the switches with a single normally-open contact and the switch with a single normally-closed contact includes one static contact, one moving contact, and one coil. A difference between the switch with a single normally-open contact and the switch with a single normally-closed contact is as follows: When the switch with a single normally-closed contact is in a default state, the static contact is in contact with the moving contact. The moving contact of the switch with a single normally-closed contact is B1, and the static contact is B4; and the moving contacts of the two switches with a single normally-open contact are respectively B2 and B3, and the static contacts are respectively B5 and B6. B1, B2, and B3 are all connected to the first terminal of the third transfer subswitch 13043, and B4 is connected to the fourth terminal of the third transfer subswitch 13043 . In a default state, B1 is in contact with B4. That is, in the default state, the first terminal of the third transfer subswitch 13043 is connected to the fourth terminal, to connect the third string 13033 and the first direct current bus 1307, and the third branch 1303 is not connected to any voltage compensation unit. B5 and B6 may be connected to either the second terminal or the third terminal of the third transfer subswitch 13043. The transfer switch unit 1304 controls whether a current flows through the coil of each of the switches with a single normally-open contact and the switch with a single normally-closed contact, to control whether contacts are in contact, thereby controlling whether ports of the third transfer subswitch 13043 are connected. In this embodiment, an example in which B5 is connected to the second terminal of the third transfer subswitch 13043 and B6 is connected to the third terminal of the third transfer subswitch 13043 is used. The transfer switch unit 1304 controls a current to flow through a coil on which B5 is located, so that B2 comes into contact with B5, that is, the first terminal of the third transfer subswitch 13043 is connected to the second terminal, and further the first voltage compensation unit 1305 and the third string 13033 are connected, and the first voltage compensation unit 1305 is connected to the third branch 1303. In addition, the transfer switch unit 1304 further controls a current to flow through a coil on which B4 is located, so that B1 is not in contact with B4, that is, the first terminal of the third transfer subswitch 13043 is disconnected from the fourth terminal, and further the third string 13033 is disconnected from the first direct current bus 1307. Alternatively, the transfer switch unit 1304 controls a current to flow through a coil on which B6 is located, so that B3 comes into contact with B6, that is, the first terminal of the third transfer subswitch 13043 is connected to the third terminal, and further the second voltage compensation unit 1306 and the third string 13033 are connected, and the second voltage compensation unit 1306 is connected to the third branch 1303. In addition, the transfer switch unit 1304 further controls a current to flow through a coil on which B4 is located, so that B1 is not in contact with B4, that is, the first terminal of the third transfer subswitch 13043 is disconnected from the fourth terminal, and further the third string 13033 is disconnected from the first direct current bus 1307.

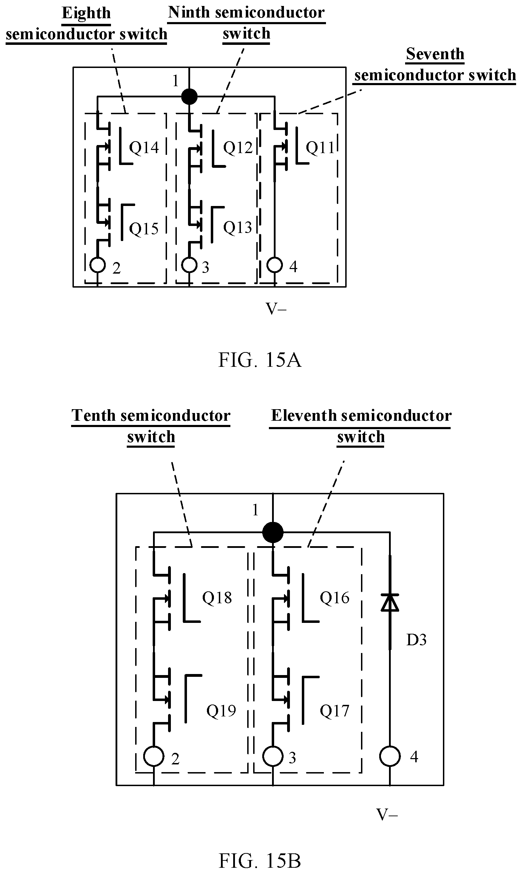

In another feasible implementation, the third transfer subswitch 13043 may be a semiconductor switch. Refer to FIG. 15A to FIG. 15D.

When the first direct current bus 1307 is a negative direct current bus, in a possible implementation, the third transfer subswitch 13043 may include a seventh semiconductor switch, an eighth semiconductor switch, and a ninth semiconductor switch that are shown in FIG. 15A. The seventh semiconductor switch is Q11, and is configured to control connection and disconnection between the first direct current bus 1307 and the third string 13033. The eighth semiconductor switch is formed by connecting Q14 and Q15 on top of each other, and is configured to control connection and disconnection between the first voltage compensation unit 1305 and the third string 13033. The ninth semiconductor is formed by connecting Q12 and Q13 on top of each other, and is configured to control connection and disconnection between the second voltage compensation unit 1306 and the third string 13033. A source of Q14 is connected to a source of Q15, a source of Q12 is connected to a source of Q13, a drain of Q11, a drain of Q12, and a drain of Q14 are separately connected to the first terminal of the third transfer subswitch 13043, a source of Q11 is connected to the fourth terminal of the third transfer subswitch 13043, a drain of Q 13 is connected to the third terminal of the third transfer subswitch 13043, and a drain of Q15 is connected to the second terminal of the third transfer subswitch 13043. Different from the first transfer subswitch 6031a described above with reference to FIG. 6, the second terminal of the third transfer subswitch 13043 is connected to the first voltage compensation unit 1305, and the third terminal is connected to the second voltage compensation unit 1306. Due to an uncertain value relationship between the output voltages of the first voltage compensation unit 1305 and the second voltage compensation unit 1306, and a MOSFET has a parasitic diode or an IGBT has an anti-parallel diode, if the output voltage of the first voltage compensation unit 1305 is 10 V, and the output voltage of the second voltage compensation unit 1306 is 20 V, when the transfer switch unit 1304 controls the third transfer subswitch 13043 to connect the third string 13033 and the second voltage compensation unit 1306, the second voltage compensation unit 1306 exerts a voltage of 20 V on the first terminal of the third transfer subswitch 13043, the first voltage compensation unit 1305 exerts a voltage of 10 V on the second terminal of the third transfer subswitch 13043, a voltage difference between the first terminal and the second terminal of the third transfer subswitch 13043 may turn on a parasitic diode of Q15, thereby also connecting the first voltage compensation unit 1305 and the third string 13033. To prevent the third string 13033 from connecting the first voltage compensation unit 1305 and the second voltage compensation unit 1306 at the same time, the eighth semiconductor switch uses two MOSFETs that are connected on top of each other, thereby adding a reverse MOSFET, namely, Q14. Similarly, the ninth semiconductor switch uses two MOSFETs that are connected on top of each other, thereby adding a reverse MOSFET, namely, Q12. The transfer switch unit 1304 may output a drive signal to Q14 and Q15 based on the voltage compensation enabling signal, to connect the first voltage compensation unit 1305 and the third string 13033, that is, the first voltage compensation unit 1305 is connected to the third branch 1303; or output a drive signal to Q12 and Q13, to connect the second voltage compensation unit 1306 and the third string 13033, that is, the second voltage compensation unit 1306 is connected to the third branch 1303; or output a drive signal to Q11, to connect the first direct current bus 1307 and the third string 13033, that is, the third branch 1303 is not connected to any voltage compensation unit.

When the first direct current bus 1307 is a negative direct current bus, in another possible implementation, the third transfer subswitch 13043 may include a tenth semiconductor switch, an eleventh semiconductor switch, and a diode that are shown in FIG. 15B. The diode is D3, and is configured to control connection and disconnection between the first direct current bus 1307 and the third string 13033. The tenth semiconductor switch is formed by connecting Q18 and Q19 on top of each other, and is configured to control connection and disconnection between the first voltage compensation unit 1305 and the third string 13033. The eleventh semiconductor switch is formed by connecting Q16 and Q17 on top of each other, and is configured to control connection and disconnection between the second voltage compensation unit 1306 and the third string 13033. For a reason for adding reverse MOSFETs connected in series, namely, Q18 and Q16 in FIG. 15B, refer to the descriptions of Q14 and Q12 in FIG. 15A. Details are not described herein again. A source of Q18 is connected to a source of Q19, a source of Q16 is connected to a source of Q17, a cathode of the diode D3, a drain of Q16, and a drain of Q18 are separately connected to the first terminal of the third transfer subswitch 13043, an anode of the diode D3 is connected to the fourth terminal of the third transfer subswitch 13043, a drain of Q 17 is connected to the third terminal of the third transfer subswitch 13043, and a drain of Q19 is connected to the second terminal of the third transfer subswitch 13043. The transfer switch unit 1304 may output a drive signal to Q18 and Q19 based on the voltage compensation enabling signal, to connect the first voltage compensation unit 1305 and the third string 13033, that is, the first voltage compensation unit 1305 is connected to the third branch 1303; or output a drive signal to Q16 and Q17, to connect the second voltage compensation unit 1306 and the third string 13033, that is, the second voltage compensation unit 1306 is connected to the third branch 1303. The diode D3 is in a reverse cut-off state when the first voltage compensation unit 1305 is connected to the third branch 1303, or when the second voltage compensation unit 1306 is connected to the third branch 1303, thereby disconnecting the third string 13033 from the first direct current bus 1307. For a specific implementation principle, refer to the embodiment described above with reference to FIG. 7. Details are not described herein again.

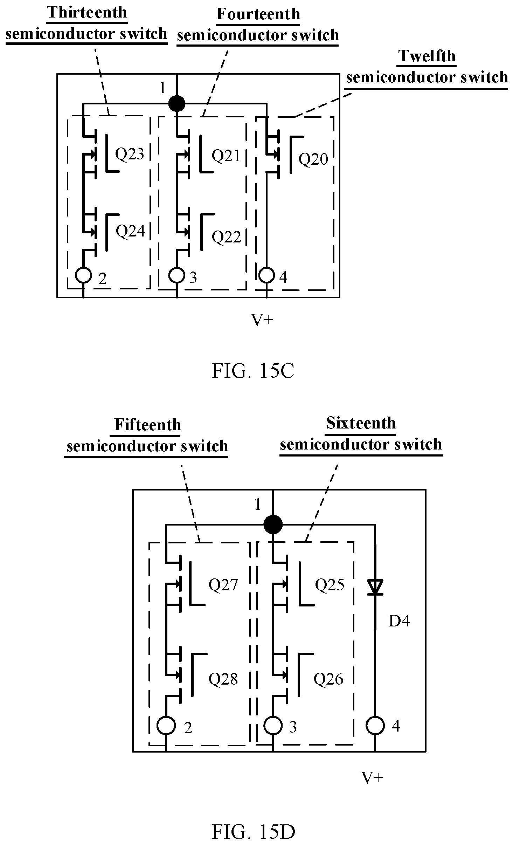

When the first direct current bus 1307 is a positive direct current bus, in a possible implementation, the third transfer subswitch 13043 may include a twelfth semiconductor switch, a thirteenth semiconductor switch, and a fourteenth semiconductor switch that are shown in FIG. 15C. The twelfth semiconductor switch is Q20, and is configured to control connection and disconnection between the first direct current bus 1307 and the third string 13033. The thirteenth semiconductor switch is formed by connecting Q23 and Q24 on top of each other, and is configured to control connection and disconnection between the first voltage compensation unit 1305 and the third string 13033. The fourteenth semiconductor is formed by connecting Q21 and Q22 on top of each other, and is configured to control connection and disconnection between the second voltage compensation unit 1306 and the third string 13033. A source of Q23 is connected to a source of Q24, a source of Q21 is connected to a source of Q22, a source of Q20, a drain of Q21, and a drain of Q23 are separately connected to the first terminal of the third transfer subswitch 13043, a drain of Q20 is connected to the fourth terminal of the third transfer subswitch 13043, a drain of Q22 is connected to the third terminal of the third transfer subswitch 13043, and a drain of Q24 is connected to the second terminal of the third transfer subswitch 13043. The transfer switch unit 1304 may output a drive signal to Q23 and Q24 based on the voltage compensation enabling signal, to connect the first voltage compensation unit 1305 and the third string 13033, that is, the first voltage compensation unit 1305 is connected to the third branch 1303; or output a drive signal to Q21 and Q22, to connect the second voltage compensation unit 1306 and the third string 13033, that is, the second voltage compensation unit 1306 is connected to the third branch 1303; or output a drive signal to Q20, to connect the first direct current bus 1307 and the third string 13033, that is, the third branch 1203 is not connected to any voltage compensation unit.

When the first direct current bus 1307 is a positive direct current bus, in another possible implementation, the third transfer subswitch 13043 may include a fifteenth semiconductor switch, a sixteenth semiconductor switch, and a diode that are shown in FIG. 15D. The diode is D4, and is configured to control connection and disconnection between the first direct current bus 1307 and the third string 13033. The fifteenth semiconductor switch is formed by connecting Q27 and Q28 on top of each other, and is configured to control connection and disconnection between the first voltage compensation unit 1305 and the third string 13033. The sixteenth semiconductor is formed by connecting Q25 and Q26 on top of each other, and is configured to control connection and disconnection between the second voltage compensation unit 1306 and the third string 13033. A source of Q27 is connected to a source of Q28, a source of Q25 is connected to a source of Q26, an anode of the diode D4, a drain of Q27, and a drain of Q25 are separately connected to the first terminal of the third transfer subswitch 13043, a cathode of the diode D4 is connected to the fourth terminal of the third transfer subswitch 13043, a drain of Q26 is connected to the third terminal of the third transfer subswitch 13043, and a drain of Q28 is connected to the second terminal of the third transfer subswitch 13043. The transfer switch unit 1304 may output a drive signal to Q27 and Q28 based on the voltage compensation enabling signal, to connect the first voltage compensation unit 1305 and the third string 13033, that is, the first voltage compensation unit 1305 is connected to the third branch 1303; or output a drive signal to Q25 and Q26, to connect the second voltage compensation unit 1306 and the third string 13033, that is, the second voltage compensation unit 1306 is connected to the third branch 1303. The diode D4 is in a reverse cut-off state when the first voltage compensation unit 1305 is connected to the third branch 1303, or when the second voltage compensation unit 1306 is connected to the third branch 1303, thereby disconnecting the third string 13033 from the first direct current bus 1307. For a specific implementation principle, refer to the embodiment described above with reference to FIG. 9. Details are not described herein again.

To sum up, a quantity of terminals included in a transfer subswitch depends on a quantity of voltage compensation units included in the power supply system. The transfer switch unit 1304 may include N transfer subswitches between a string and a voltage compensation unit. For example, a first transfer subswitch, a second transfer subswitch, ..., and an (N-1)^{th} transfer subswitch each include three terminals, and are separately configured to connect a first string, a second string, ..., and an (N-1)^{th} string to the voltage compensation unit or a direct current bus. An N^{th} transfer subswitch selectively connects an N^{th} string to any voltage compensation unit or direct current bus. That is, the N^{th} transfer subswitch needs to include (M+2) terminals, M terminals are used to select any one of M voltage compensation units, one of the two remaining terminals is used to connect to the N^{th} string, and the other terminal is used to connect to the direct current bus.

In a feasible implementation, the first string 13011, the second string 13022, and the third string 13033 may include at least one direct current component and a converter. For details, refer to the embodiment described in FIG. 10. Details are not described herein again.

Further, in a feasible implementation, the first string 13011, the second string 13022, and the third string 13033 may be described with reference to the foregoing embodiment described in FIG. 11. At least one string may include at least two substrings.

In an optional implementation, the transfer switch unit 1304 in this application may include at least one contact switch and/or at least one semiconductor switch. That is, specific structures of the first transfer subswitch 13041, the second transfer subswitch 13042, and the third transfer subswitch 13043 may be different. For example, the first transfer subswitch 13041 is a contact switch, the second transfer subswitch 13042 is a contact switch, and the third transfer subswitch 13043 is a semiconductor switch. Alternatively, the first transfer subswitch 13041 is a contact switch, the second transfer subswitch 13042 is a semiconductor switch, the third transfer subswitch 13043 is a contact switch, and so on.

It can be understood that Q11, Q12, Q13, Q14, and the like among the semiconductor switches may be MOSFETs, or may be IGBTs and anti-parallel diodes of the IGBTs. A MOSFET is used as an example for description above with reference to each of FIG. 15A to FIG. 15D. If Q11, Q12, Q13, Q14, and the like are IGBTs and anti-parallel diodes of the IGBTs, a source of the MOSFET is replaced with an emitter of the IGBT, a drain of the MOSFET is replaced with a collector of the IGBT, an anode of the anti-parallel diode is connected to the emitter of the IGBT, and a cathode is connected to the collector of the IGBT.

An embodiment of this application further provides a string compensation method. The method is applied to any power supply system described above, where the power supply system includes a first branch on which a first string is located, a second branch on which a second string is located, a first voltage compensation unit, and a controller. The method includes the following steps:
A transfer switch unit receives a voltage compensation enabling signal from the controller, and connects the first voltage compensation unit to the first branch based on the voltage compensation enabling signal, where the voltage compensation enabling signal is generated based on an operating state parameter of the first string and an operating state parameter of the second string; and the first voltage compensation unit is configured to compensate for an output voltage of the first branch. The transfer switch unit is located in the power supply system.

An operating state parameter of a string may be an output voltage, an output current, an output power, and/or the like of the string. In this application, the output voltage is used as an example for description.

In a specific implementation, the controller obtains the operating state parameter of the first string and the operating state parameter of the second string, and generates the voltage compensation enabling signal based on the operating state parameter of the first string and the operating state parameter of the second string. For example, when an output voltage of the first string is different from an output voltage of the second string, for example, the output voltage of the first string is relatively small, the controller may generate a voltage compensation enabling signal, and send the voltage compensation enabling signal to the transfer switch unit. When receiving the voltage compensation enabling signal, the transfer switch unit controls the first voltage compensation unit to connect to the first branch. That is, the first voltage compensation unit is connected only to the first branch requiring voltage compensation, instead of the second branch requiring no voltage compensation, thereby preventing the voltage compensation unit from causing an unnecessary system loss in the second branch, and reducing a quantity of voltage compensation units in the power supply system and system costs.

Further, the power supply system includes a first direct current bus and a second direct current bus. The first voltage compensation unit includes a first output terminal and a second output terminal, and the first output terminal is connected to the first direct current bus. Specific implementation in which the transfer switch unit connects the first voltage compensation unit to the first branch based on the voltage compensation enabling signal is as follows: The transfer switch unit connects the second output terminal of the first voltage compensation unit to one terminal of the first string based on the voltage compensation enabling signal; and connects the other terminal of the first string to the second direct current bus. If the first direct current bus is a negative direct current bus, the first output terminal of the first voltage compensation unit is a negative output terminal, and the second output terminal is a positive output terminal. If the first direct current bus is a positive direct current bus, the first output terminal of the first voltage compensation unit is a positive output terminal, and the second output terminal is a negative output terminal. The transfer switch unit and the first voltage compensation unit may be disposed on each of a positive direct current bus side and a negative direct current bus side, so that applicability of the power supply system can be improved.

Further, the transfer switch unit connects one terminal of the second string to the first direct current bus based on the voltage compensation enabling signal; and connects the other terminal of the second string to the second direct current bus.

It should be noted that, in a default state, the first voltage compensation unit is connected to neither the first branch nor the second branch.

In addition, when the output voltage of the first string is the same as the output voltage of the second string, based on the operating state parameter of the first string and the operating state parameter of the second string, the controller may not generate the voltage compensation enabling signal or may generate a default voltage compensation signal. When receiving no voltage compensation enabling signal or the default voltage compensation signal, the transfer switch unit controls the first voltage compensation unit to connect to neither the first branch nor the second branch.

In an optional implementation, the power supply system is applied to photovoltaics, the first string and the second string are photovoltaic strings, and the controller may be disposed in a photovoltaic inverter control module in the power supply system.

In another optional implementation, a processor is disposed in each of the first string and the second string that are in the power supply system, and each processor may collect an operating state parameter of a corresponding string, and summarize the collected operating state parameter into any processor. The processor that obtains the operating state parameters of all the strings is the controller.

In a possible implementation, the controller may further determine a voltage compensation reference value based on the operating state parameter of the first string and the operating state parameter of the second string, and send the voltage compensation reference value to the first voltage compensation unit, so that the first voltage compensation unit compensates for the output voltage of the first branch based on the voltage compensation reference value, that is, the voltage compensation reference value is an output voltage value of the first voltage compensation unit.

In a feasible implementation, the transfer switch unit includes a first transfer subswitch between the first voltage compensation unit and the first string, and the first transfer subswitch is a contact switch or a semiconductor switch. Specific implementation in which the transfer switch unit connects the first voltage compensation unit to the first branch based on the voltage compensation enabling signal may be as follows: The transfer switch unit controls the first transfer subswitch to connect the first voltage compensation unit and the first string based on the voltage compensation enabling signal. For a specific structure and a specific implementation process of the transfer switch unit, refer to the foregoing embodiments described in FIG. 4 to FIG. 9. Details are not described herein again. For example, the first transfer subswitch includes a first semiconductor switch and a second semiconductor switch, the first semiconductor switch is configured to connect the first voltage compensation unit and the first string, and the second semiconductor switch is configured to disconnect the first string from the first direct current bus in the power supply system. Specific implementation in which the transfer switch unit controls the first transfer subswitch to connect the first voltage compensation unit and the first string based on the voltage compensation enabling signal may be as follows: Based on the voltage compensation enabling signal, the transfer switch unit controls the first semiconductor switch to connect the first voltage compensation unit and the first string, and controls the second semiconductor switch to disconnect the first string from the first direct current bus. The semiconductor switches are used as the transfer switch unit. Compared with a contact switch, the semiconductor switches can reduce a volume of the power supply system, and perform switch-on and switch-off operations at a high voltage and a high current, thereby improving system security. For another example, the first transfer subswitch includes a third semiconductor switch and a diode, the third semiconductor switch is configured to connect the first voltage compensation unit and the first string, and the diode is in a reverse cut-off state when the third semiconductor switch connects the first voltage compensation unit and the first string, to disconnect the first string from the first direct current bus in the power supply system. Specific implementation in which the transfer switch unit controls the first transfer subswitch to connect the first voltage compensation unit and the first string based on the voltage compensation enabling signal may also be as follows: The transfer switch unit controls, based on the voltage compensation enabling signal, the third semiconductor switch to connect the first voltage compensation unit and the first string, to disconnect the first string from the first direct current bus. A combination of the semiconductor switch and the diode is used as the transfer switch unit. Compared with the use of two semiconductor switches, system costs are further reduced.

Further, in an optional implementation, the transfer switch unit further includes a second transfer subswitch; and the transfer switch unit further controls, based on the voltage compensation enabling signal, the second transfer subswitch to connect the first direct current bus in the power supply system and the second string.

It should be noted that, after the transfer switch unit connects the voltage compensation unit to the first branch, because operating state parameters of strings are constantly changing, the controller may re-determine the first string based on the operating state parameters of the strings, that is, re-determine a string requiring voltage compensation. When the transfer switch unit includes a contact switch, to prevent the contact switch from being stitched, before switching off the transfer switch unit, the controller may first control the output voltage value of the first voltage compensation unit to be equal to or less than a preset threshold, and then control the transfer switch unit to be switched off, where the preset threshold is determined by a model of the contact switch.

In a possible embodiment, the power supply system includes N branches on which N strings are located and M voltage compensation units, both N and M are positive integers, and M is less than N; and the N branches include the first branch and the second branch, and the M voltage compensation units include the first voltage compensation unit. The transfer switch unit further respectively connects all or some of the voltage compensation units to some branches based on the voltage compensation enabling signal. For a specific implementation process, refer to the foregoing embodiment described in FIG. 13. Details are not described herein again.

In a feasible implementation, each string includes at least one direct current component and a converter corresponding to the direct current component; and the controller controls the converter to adjust an operating state of the corresponding direct current component. For example, the converter may be a buck circuit or a boost circuit, and the controller adjusts the operating state of the direct current component by controlling an output voltage of the converter.

It should be noted that the terms "first", "second", and the like are merely used for distinction and descriptions, but cannot be understood as indicating or implying relative importance.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A power supply system, comprising: a first branch on which a first string is located, a second branch on which a second string is located, a transfer switch unit, a first voltage compensation unit, and a controller, wherein
the transfer switch unit is configured to connect the first voltage compensation unit to the first branch based on a voltage compensation enabling signal received from the controller, wherein the voltage compensation enabling signal is generated by the controller based on an operating state parameter of the first string and an operating state parameter of the second string; and
the first voltage compensation unit is configured to compensate for an output voltage of the first branch.

2. The power supply system according to claim 1, wherein the power supply system further comprises a first direct current bus and a second direct current bus; and the first voltage compensation unit comprises a first output terminal and a second output terminal, and the first output terminal of the first voltage compensation unit is connected to the first direct current bus;
the transfer switch unit is configured to connect the second output terminal of the first voltage compensation unit to one terminal of the first string based on the voltage compensation enabling signal; and
the other terminal of the first string is connected to the second direct current bus.

3. The power supply system according to claim 2, wherein the transfer switch unit is further configured to connect one terminal of the second string to the first direct current bus based on the voltage compensation enabling signal; and
the other terminal of the second string is connected to the second direct current bus.

4. The power supply system according to either claim 2 or 3, wherein the first voltage compensation unit further comprises a first input terminal and a second input terminal; and
the first input terminal of the first voltage compensation unit is connected to the first direct current bus, and the second input terminal of the first voltage compensation unit is connected to the second direct current bus.

5. The power supply system according to any one of claims 1 to 4, wherein the first string comprises at least two substrings.

6. The power supply system according to claim 5, wherein output voltage ranges corresponding to respective maximum power points of the at least two substrings comprised in the first string at least partially overlap.

7. The power supply system according to any one of claims 1 to 6, wherein the transfer switch unit comprises a first transfer subswitch between the first voltage compensation unit and the first string, and the first transfer subswitch is a contact switch or a semiconductor switch; and
the transfer switch unit is configured to control, based on the voltage compensation enabling signal, the first transfer subswitch to connect the first voltage compensation unit and the first string.

8. The power supply system according to claim 7, wherein the transfer switch unit further comprises a second transfer subswitch; and
the transfer switch unit is further configured to control, based on the voltage compensation enabling signal, the second transfer subswitch to connect the first direct current bus in the power supply system and the second string.

9. The power supply system according to claim 7, wherein the first transfer subswitch comprises a first semiconductor switch and a second semiconductor switch, the first semiconductor switch is configured to connect the first voltage compensation unit and the first string, and the second semiconductor switch is configured to disconnect the first string from the first direct current bus in the power supply system; and
the transfer switch unit is configured to control, based on the voltage compensation enabling signal, the first semiconductor switch to connect the first voltage compensation unit and the first string, and control the second semiconductor switch to disconnect the first string from the first direct current bus.

10. The power supply system according to claim 7, wherein the first transfer subswitch comprises a third semiconductor switch and a diode, the third semiconductor switch is configured to connect the first voltage compensation unit and the first string, and the diode is in a reverse cut-off state when the third semiconductor switch connects the first voltage compensation unit and the first string, so that the diode is configured to disconnect the first string from the first direct current bus in the power supply system; and
the transfer switch unit is configured to control, based on the voltage compensation enabling signal, the third semiconductor switch to connect the first voltage compensation unit and the first string, and disconnect the first string from the first direct current bus.

11. The power supply system according to any one of claims 1 to 10, wherein the first voltage compensation unit comprises a non-isolated buck conversion circuit.

12. The power supply system according to any one of claims 1 to 11, wherein the power supply system comprises N branches on which N strings are located and M voltage compensation units, both N and M are positive integers, and M is less than N; and the N branches comprise the first branch and the second branch, and the M voltage compensation units comprise the first voltage compensation unit; and
the transfer switch unit is configured to respectively connect all or some of the voltage compensation units to some branches based on the voltage compensation enabling signal.

13. The power supply system according to any one of claims 1 to 12, wherein each string comprises at least one direct current component and a converter corresponding to the direct current component, and the converter is configured to adjust an operating state of the corresponding direct current component.

14. The power supply system according to any one of claims 1 to 13, wherein the first string and the second string are photovoltaic strings.

15. A power supply method, applied to a power supply system, wherein the power supply system comprises a first branch on which a first string is located, a second branch on which a second string is located, a first voltage compensation unit, and a controller; and the method comprises:
receiving a voltage compensation enabling signal from the controller, and connecting the first voltage compensation unit to the first branch based on the voltage compensation enabling signal, wherein the voltage compensation enabling signal is generated by the controller based on an operating state parameter of the first string and an operating state parameter of the second string; and
the first voltage compensation unit is configured to compensate for an output voltage of the first branch.

16. The method according to claim 15, wherein the power supply system further comprises a first direct current bus and a second direct current bus; and the first voltage compensation unit comprises a first output terminal and a second output terminal, and the first output terminal of the first voltage compensation unit is connected to the first direct current bus;
the connecting the first voltage compensation unit to the first branch based on the voltage compensation enabling signal comprises:
connecting the second output terminal of the first voltage compensation unit to one terminal of the first string based on the voltage compensation enabling signal; and
the other terminal of the first string is connected to the second direct current bus.

17. The method according to claim 16, wherein the method further comprises:
connecting one terminal of the second string to the first direct current bus based on the voltage compensation enabling signal; and
the other terminal of the second string is connected to the second direct current bus.

18. The method according to any one of claims 15 to 17, wherein the transfer switch unit comprises a first transfer subswitch between the first voltage compensation unit and the first string, and the first transfer subswitch is a contact switch or a semiconductor switch; and
the connecting the first voltage compensation unit to the first branch based on the voltage compensation enabling signal comprises:
controlling, based on the voltage compensation enabling signal, the first transfer subswitch to connect the first voltage compensation unit and the first string.

19. The method according to claim 18, wherein the transfer switch unit further comprises a second transfer subswitch; and the method further comprises:
controlling, based on the voltage compensation enabling signal, the second transfer subswitch to connect the first direct current bus in the power supply system and the second string.

20. The method according to claim 18, wherein the first transfer subswitch comprises a first semiconductor switch and a second semiconductor switch; and
the controlling, based on the voltage compensation enabling signal, the first transfer subswitch to connect the first voltage compensation unit and the first string comprises:
controlling, based on the voltage compensation enabling signal, the first semiconductor switch to connect the first voltage compensation unit and the first string, and controlling the second semiconductor switch to disconnect the first string from the first direct current bus.

21. The method according to claim 18, wherein the first transfer subswitch comprises a third semiconductor switch and a diode and
the controlling, based on the voltage compensation enabling signal, the first transfer subswitch to connect the first voltage compensation unit and the first string comprises:
controlling, based on the voltage compensation enabling signal, the third semiconductor switch to connect the first voltage compensation unit and the first string, and enabling the diode to be in a reverse cut-off state, to disconnect the first string from the first direct current bus.

22. The method according to any one of claims 15 to 21, wherein the power supply system comprises N branches on which N strings are located and M voltage compensation units, both N and M are positive integers, and M is less than N; and the N branches comprise the first branch and the second branch, and the M voltage compensation units comprise the first voltage compensation unit; and
the method further comprises:
respectively connecting all or some of the voltage compensation units to some branches based on the voltage compensation enabling signal.

23. The method according to any one of claims 15 to 22, wherein each string comprises at least one direct current component and a converter corresponding to the direct current component; and
the controller is further configured to control the converter to adjust an operating state of the corresponding direct current component.
